# EUROPEAN PATENT APPLICATION

(11) **EP 4 475 275 A1**
(43) Date of publication of application: **11.12.2024**
(21) Application number: 23893012.7
(22) Date of filing: 08.05.2023
(51) Int. Cl.: H01M 10/54

(54) **THERMAL DESORPTION TREATMENT SYSTEM FOR WASTE BATTERIES**

(30) Priority: 21.11.2022 CN 202223094082 U; 24.11.2022 CN 202223149515 U; 20.12.2022 CN 202223566453 U; 10.02.2023 CN 202320215600 U; 10.02.2023 CN 202320215613 U; 02.03.2023 CN 202320426937 U
(71) Applicant: Jereh Environmental Protection Technology Co., Ltd., Yantai, Shandong 264003 (CN)
(72) Inventor: CHEN, Hongfa, Yantai, Shandong 264003 (CN); YU, Xuekong, Yantai, Shandong 264003 (CN); LIU, Yang, Yantai, Shandong 264003 (CN)
(74) Representative: Ziebig Hengelhaupt Intellectual Property Attorneys Patentanwaltskanzlei PartGmbB
(86) International application number: PCT/CN2023/092822
(87) International publication number: WO 2024/108911

(57) **Abstract**

This application provides a waste battery thermal desorption treatment system. The waste battery thermal desorption treatment system includes: a rotary kiln, provided with a feed port, a thermal desorption cavity, a heating cavity, a discharge port, and a first exhaust port, where at least part of the thermal desorption cavity is located in the heating cavity and is rotatably provided relative to the heating cavity; a dust removal apparatus, including a housing and a dust removal structure disposed in the housing, where the housing is provided with a gas inlet port and a second exhaust port in communication with the first exhaust port, and the dust removal structure is configured to collect impurities in a gas exhausted from the first exhaust port, to enable gaseous components separated from the impurities in the gas to enter the second exhaust port; a condenser, in communication with the second exhaust port, to condense an electrolyte constituent in the gaseous components and form an electrolyte; and an adsorption column, where a defluorination agent is disposed in the adsorption column, to use the defluorination agent to perform dry defluorination on remaining constituents in the gaseous components. This application resolves the problem of low recycling efficiency of waste lithium batteries in the prior art.

## Description

### CROSS-REFERENCE TO RELATED APPLICATIONS

This application claims priority to Patent Application No. 202320426937.X, filed with the China National Intellectual Property Administration on March 2, 2023 and entitled "WASTE BATTERY THERMAL DESORPTION TREATMENT SYSTEM", priority to Patent Application No. 202223094082.X, filed with the China National Intellectual Property Administration on November 21, 2022 and entitled "DUST COLLECTION SYSTEM", priority to Patent Application No. 202223149515.7, filed with the China National Intellectual Property Administration on November 24, 2022 and entitled "SELF-CLEANING MECHANISM AND ROTARY KILN", priority to Patent Application No. 202223566453.X, filed with the China National Intellectual Property Administration on December 20, 2022 and entitled "BATTERY CRUSHING APPARATUS", priority to Patent Application No. 202320215600.4, filed with the China National Intellectual Property Administration on February 10, 2023 and entitled "SEALING ASSEMBLY AND ROTARY KILN PROVIDED WITH SAME", and priority to Patent Application No. 202320215613.1, filed with the China National Intellectual Property Administration on February 10, 2023 and entitled "ROTARY KILN".

### TECHNICAL FIELD

This application relates to the field of waste battery treatment technologies, and specifically, to a waste battery thermal desorption treatment system.

### BACKGROUND

At present, in crushing, sorting, and recycling of waste lithium batteries and a production process of battery powder regeneration technologies, thermal desorption treatment is usually performed on battery powder or a crushed battery electrode plate mixed material, to remove organic substances such as carbonic esters and PVDF in the material.

However, in the prior art, organic substances such as carbonic esters and PVDF formed after the thermal desorption treatment are directly discharged to the environment. This causes resource waste and incomplete recycling, affecting the recycling efficiency of waste lithium batteries, and also pollutes the environment.

### SUMMARY

A main objective of this application is to provide a waste battery thermal desorption treatment system, to resolve the problem of low recycling efficiency of waste lithium batteries in the prior art.

To achieve the foregoing objective, this application provides a waste battery thermal desorption treatment system, including: a rotary kiln, provided with a feed port, a thermal desorption cavity, a heating cavity, a discharge port, and a first exhaust port, where the feed port is in communication with the discharge port through the thermal desorption cavity, the first exhaust port is in communication with the thermal desorption cavity, and at least part of the thermal desorption cavity is located in the heating cavity and is rotatably provided relative to the heating cavity; a dust removal apparatus, including a housing and a dust removal structure disposed in the housing, where the housing is provided with a gas inlet port and a second exhaust port in communication with the first exhaust port, and the dust removal structure is configured to collect impurities in a gas exhausted from the first exhaust port, to enable gaseous components separated from the impurities in the gas to enter the second exhaust port; a condenser, where the condenser is in communication with the second exhaust port, to condense an electrolyte constituent in the gaseous components and form an electrolyte; and an adsorption column, where a defluorination agent is disposed in the adsorption column, to use the defluorination agent to perform dry defluorination on remaining constituents in the gaseous components.

Further, the rotary kiln includes: a heating furnace, provided with the heating cavity; a heating apparatus, disposed in the heating cavity; a rotary cylinder, provided with the thermal desorption cavity, where at least part of the rotary cylinder extends into the heating cavity and is rotatably connected to the heating furnace; a kiln head cover, disposed at one end of the rotary cylinder, where the feed port is provided in the kiln head cover; and a kiln tail cover, disposed at the other end of the rotary cylinder, where the discharge port is provided in the kiln tail cover, where the first exhaust port is provided in the kiln head cover or the kiln tail cover.

Further, the waste battery thermal desorption treatment system further includes: a cooling apparatus, where the cooling apparatus is in communication with the discharge port, to cool and reduce the temperature of a material after thermal desorption is completed; a buffering apparatus, in communication with the condenser, where the buffering apparatus is configured to collect the electrolyte formed after condensation; and a first pump body structure, where the first pump body structure is in communication with the buffering apparatus, to pump the electrolyte buffered in the buffering apparatus outside the waste battery thermal desorption treatment system.

Further, the adsorption column is provided with a third exhaust port, and the waste battery thermal desorption treatment system further includes: a waste gas treatment apparatus, where the waste gas treatment apparatus is in communication with the third exhaust port, to recycle or burn a gas exhausted from the third exhaust port.

Further, the waste battery thermal desorption treatment system includes at least two dust removal apparatuses, the waste battery thermal desorption treatment system further includes a dust collection system, and the dust collection system includes a cyclonic separation apparatus, a transport pipe, and a material recycling apparatus; and the at least two dust removal apparatuses include a first dust removal apparatus and a second dust removal apparatus, an outlet port of the first dust removal apparatus is in communication with a first end of the transport pipe, an outlet port of the second dust removal apparatus is in communication with a second end of the transport pipe, a third end of the transport pipe is in communication with a gas intake port of the cyclonic separation apparatus, and an outlet port of the cyclonic separation apparatus is in communication with an entrance of the material recycling apparatus.

Further, an outlet port of each dust removal apparatus is in communication with the transport pipe through a dust exit pipe, and a first airlock is disposed on the dust exit pipe.

Further, the dust collection system further includes a sweeping apparatus, an outlet port of each dust removal apparatus is in communication with the transport pipe through a dust exit pipe, the transport pipe is provided with at least two material drop spaces, the at least two material drop spaces are respectively opposite to the dust exit pipes in a one-to-one correspondence, the sweeping apparatus is provided with at least one blowing port, and the blowing port is opposite to the material drop spaces.

Further, the waste battery thermal desorption treatment system further includes a self-cleaning mechanism, the self-cleaning mechanism is used for the rotary kiln, the rotary kiln includes a rotary cylinder, the self-cleaning mechanism includes a scraping member movably disposed in the rotary cylinder, the scraping member includes a body and a plurality of scraping claws, the body extends in an axial direction of the rotary cylinder, the plurality of scraping claws are disposed around a periphery of the body, and the scraping claws are configured to scrape off a material deposit on an inner wall of the rotary cylinder.

Further, the plurality of scraping claws are spirally disposed around the body, and the plurality of scraping claws are connected end to end to form a spring-shaped structure.

Further, a toggle plate extending in a radial direction of the rotary cylinder is disposed on the inner wall of the rotary cylinder, the scraping member further includes a retaining plate disposed corresponding to the toggle plate, the retaining plate is connected to the body, and the retaining plate and the scraping member are spaced apart.

Further, the rotary kiln further includes a kiln head cover disposed at a front end of the rotary cylinder and a kiln tail cover disposed at a tail end of the rotary cylinder, the self-cleaning mechanism further includes a first connecting base and a first connecting member, the first connecting base is connected to an outer side of the kiln head cover or the kiln tail cover, and the first connecting member is movably connected to the first connecting base and the scraping member.

Further, the rotary kiln further includes a kiln head cover disposed at a front end of the rotary cylinder and a kiln tail cover disposed at a tail end of the rotary cylinder, and the self-cleaning mechanism further includes: a first connecting base, connected to an outer side of the kiln head cover; a second connecting base, connected to an outer side of the kiln tail cover; a first connecting member, movably connected to the first connecting base and one end of the scraping member; and a second connecting member, movably connected to the second connecting base and the other end of the scraping member.

Further, the waste battery thermal desorption treatment system further includes a battery crushing apparatus, the battery crushing apparatus is configured to crush a battery, a crushed battery material generated by the battery crushing apparatus passes through the feed port to enter the thermal desorption cavity, and the battery crushing apparatus includes: a supporting body, where the supporting body is provided with a crushing cavity and a feed channel that are in communication with each other, and the feed channel is located above the crushing cavity; a first gas introduction portion, disposed at a bottom of the supporting body and in communication with the crushing cavity, where a first inert gas is introduced into the crushing cavity through the first gas introduction portion; a feed assembly, disposed in the feed channel, where the feed assembly includes a first movement member and a second movement member that are spaced apart in an extension direction of the feed channel, a first partition cavity is provided between the first movement member and the second movement member, the first movement member and the second movement member are separately movably disposed, and through movement of the first movement member and the second movement member, a to-be-crushed material drops into the crushing cavity or drops into the first partition cavity; and a second gas introduction portion, disposed between the first movement member and the second movement member and is in communication with the first partition cavity, and a second inert gas is introduced into the first partition cavity through the second gas introduction portion.

Further, the supporting body is provided with a first through opening, the first through opening extends in a circumferential direction of the supporting body, and at least part of the first movement member is inserted into the feed channel through the first through opening and moves in a radial direction of the feed channel.

Further, the supporting body is provided with a second through opening, the second through opening extends in a circumferential direction of the supporting body, and at least part of the second movement member is inserted into the feed channel through the second through opening and moves in a radial direction of the feed channel.

Further, the rotary kiln includes: a kiln head cover, a kiln tail cover, and a rotary cylinder, where a connecting end of the kiln head cover and a connecting end of the kiln tail cover are respectively sleeved over two ends of the rotary cylinder; and a sealing structure, where a to-be-sealed gap exists between a radial direction of the kiln head cover and/or a radial direction of the kiln tail cover and a radial direction of the rotary cylinder, the rotary cylinder is rotatably disposed relative to the kiln head cover and the kiln tail cover, and the sealing structure is configured to block and seal the to-be-sealed gap, where the sealing structure includes: a first sealing portion, where the first sealing portion is a flexible structure, and the flexible structure is mounted in the to-be-sealed gap; and/or a second sealing portion, connected to the connecting end of the kiln head cover or the connecting end of the kiln tail cover, where the second sealing portion is configured to defining a sealing cavity with the rotary cylinder, and a protection gas is filled in the sealing cavity; and/or a third sealing portion, mounted at the connecting end of the kiln head cover or the connecting end of the kiln tail cover, where the third sealing portion includes a first connecting portion, a second connecting portion, and a sealing member, the first connecting portion is fixedly connected to the kiln head cover or the kiln tail cover, a sealing end of the first connecting portion and a sealing end of the second connecting portion are arranged in an axial direction of the kiln head cover or the kiln tail cover, and the sealing member is configured to seal a gap between the sealing end of the first connecting portion and the sealing end of the second connecting portion.

Further, the first sealing portion is an annular structure, an outer ring of the first sealing portion is fixedly connected to the kiln head cover or the kiln tail cover, and an inner ring of the first sealing portion is joined to an outer wall of the rotary cylinder; and/or the sealing cavity is an annular cavity body, and the annular cavity body is disposed surrounding the outer wall of the rotary cylinder.

Further, the sealing structure includes the first sealing portion, the second sealing portion, and the third sealing portion, and the second sealing portion is disposed between the first sealing portion and the third sealing portion; and the sealing structure further includes: a flexible connecting member, disposed between the first sealing portion and the second sealing portion, where the flexible connecting member is an annular housing structure, and at least part of the flexible connecting member is retractably disposed in an axial direction of the rotary cylinder.

Further, the rotary kiln includes: a rotary cylinder and an end portion supporting structure, where the rotary cylinder is rotatably disposed, the end portion supporting structure is disposed at an end portion of the rotary cylinder, and the end portion supporting structure is fixedly disposed; a rotary bearing structure, where one of an inner ring of the rotary bearing structure and an outer ring of the rotary bearing structure is connected to the rotary cylinder, and the other one of the inner ring of the rotary bearing structure and the outer ring of the rotary bearing structure is connected to the end portion supporting structure; and a sealing assembly, mounted on the end portion supporting structure, where the sealing assembly includes a sealing part and an abutting part, the sealing part is disposed on the rotary bearing structure, and the abutting part abuts against one end of the sealing part, to make the other end of the sealing part joined to at least part of the rotary bearing structure under an abutting action of the abutting part.

Further, the abutting part includes: an abutting rod, where an end portion of the abutting rod abuts against an end of the sealing part, and a limiting step is disposed on the abutting rod; an elastic member, sleeved over the abutting rod, where one end of the elastic member abuts against the limiting step; and an abutting sleeve, sleeved over an end of the abutting rod away from the sealing part, where the abutting sleeve is disposed protruding from a sidewall of the abutting rod, and the other end of the elastic member abuts against the abutting sleeve.

Further, the rotary bearing structure includes a first rotary bearing, the end portion supporting structure includes a kiln head supporting structure, and the kiln head supporting structure includes: a first supporting foundation and a first supporting board group, where the first supporting board group is disposed on the first supporting foundation, the first supporting board group is connected to an outer ring of the first rotary bearing, and the rotary cylinder is connected to an inner ring of the first rotary bearing.

Further, the rotary kiln further includes a feed pipe group, and the feed pipe group includes: a feed pipe, where the feed pipe is in communication with the rotary cylinder; and a sealing board group, where the sealing board group is connected to the first supporting board group, and at least part of the sealing board group and the rotary cylinder define a sealing cavity body.

Further, the sealing assembly includes a first sealing assembly, and the sealing board group includes: a first annular board, where the first annular board is connected to the first supporting board group, a first mounting through hole is provided in the first annular board, the first annular board is disposed relative to the first rotary bearing, and the first sealing assembly is mounted in the first mounting through hole.

Further, the sealing board group further includes: a connecting sleeve pipe, sleeved over the feed pipe, where one end of the connecting sleeve pipe is disposed connected to the rotary cylinder, and the other end of the connecting sleeve pipe is connected to the first annular board; a first connecting end board, disposed between the first annular board and the feed pipe; and a second connecting end board, disposed between the connecting sleeve pipe and the feed pipe, to enable the connecting sleeve pipe, the first annular board, the first connecting end board, and the second connecting end board define the sealing cavity body.

Further, the feed pipe group further includes: a first gas inlet pipe line, where the first gas inlet pipe line is in communication with the sealing cavity body, and the first gas inlet pipe line is configured to introduce a sealing protection gas.

Further, the rotary bearing structure includes a second rotary bearing, the rotary cylinder is connected to an outer ring of the second rotary bearing, the sealing assembly includes a second sealing assembly, the end portion supporting structure includes a kiln tail supporting structure, and the kiln tail supporting structure includes: a supporting cover, connected to an inner ring of the second rotary bearing, where the supporting cover and the second sealing assembly are respectively disposed at two ends of the second rotary bearing.

Further, the rotary kiln further includes: a second annular board, connected to the rotary cylinder, where the second annular board is disposed at an end of the second rotary bearing away from the supporting cover, a second mounting through hole is provided in the second annular board, and the second sealing assembly is mounted in the second mounting through hole; and/or, a guide assembly, where the guide assembly includes a guide track and a guide block that extend in a preset direction, the guide block is movably disposed on the guide track, one of the guide block and the guide track is connected to the supporting cover, and the other one of the guide block and the guide track is connected to the inner ring of the second rotary bearing. Through the application of the technical solution in this application, a waste battery thermal desorption treatment system includes a rotary kiln, a dust removal apparatus, a condenser, and an adsorption column. The rotary kiln is provided with a feed port, a thermal desorption cavity, a heating cavity, a discharge port, and a first exhaust port. The feed port is in communication with the discharge port through the thermal desorption cavity. The first exhaust port is in communication with the thermal desorption cavity. Battery powder or a crushed battery electrode plate mixed material enter the thermal desorption cavity through the feed port. The thermal desorption cavity drives the mixed material located therein to rotate relative to the heating cavity, to heat the mixed material through the heating cavity uniformly, so that the uniformity of the thermal desorption treatment is improved, and the quality of a material after the thermal desorption treatment is improved. In this way, the dust removal apparatus collects impurities in a gas exhausted from the rotary kiln, to enable gaseous components separated from the impurities in the gas to enter a second exhaust port of the dust removal apparatus. The condenser is in communication with the second exhaust port and is configured to condense an electrolyte constituent in the gaseous components and form an electrolyte, and then a defluorination agent disposed in the adsorption column is used to perform dry defluorination on remaining constituents in the gaseous components, to eventually form an inorganic compound like calcium fluoride, thereby resolving the problem of low recycling efficiency of waste lithium batteries in the prior art.

Compared with direct discharge of gaseous organic components to an environment in the prior art, the waste battery thermal desorption treatment system in this application condenses and adsorbs organic components, to form an inorganic compound for subsequent use, so that the recycling efficiency of the battery powder or the crushed battery electrode plate mixed material is improved, and no pollution is caused to the environment.

### BRIEF DESCRIPTION OF THE DRAWINGS

The accompanying drawings constituting a part of this application are used for providing further understanding for this application. Exemplary embodiments of this application and descriptions thereof are used for explaining this application and do not constitute any inappropriate limitation to this application. In the accompanying drawings:
FIG. 1 is a schematic structural diagram of Embodiment 1 of a waste battery thermal desorption treatment system according to this application;
FIG. 2 is a schematic structural diagram of a rotary kiln of a waste battery thermal desorption treatment system in FIG. 1;
FIG. 3 is a schematic structural diagram of Embodiment 2 of a waste battery thermal desorption treatment system according to this application;
FIG. 4 is a schematic structural diagram of a dust collection system according to Embodiment 3 of this application;
FIG. 5 is a three-dimensional schematic structural diagram of a self-cleaning mechanism according to Embodiment 4 of this application;
FIG. 6 is a cross-sectional view along A-A in FIG. 5;
FIG. 7 is a schematic structural diagram of a self-cleaning mechanism according to another implementation in Embodiment 4;
FIG. 8 is a schematic structural diagram of a self-cleaning mechanism according to still another implementation of Embodiment 4;
FIG. 9 is a cross-sectional view along B-B in FIG. 8;
FIG. 10 is a schematic diagram of a first state of a battery crushing apparatus according to Embodiment 5 of this application;
FIG. 11 is a schematic diagram of a second state of a battery crushing apparatus according to Embodiment 5 of this application;
FIG. 12 is a schematic diagram of a third state of a battery crushing apparatus according to Embodiment 5 of this application;
FIG. 13 is a schematic diagram of a fourth state of a battery crushing apparatus according to Embodiment 5 of this application;
FIG. 14 is an overall schematic structural diagram of a sealing structure according to Embodiment 6 of this application;
FIG. 15 is a partial enlarged view of A of a sealing structure according to Embodiment 6 of this application;
FIG. 16 is a partial schematic diagram of a rotary bearing of a sealing structure according to Embodiment 6 of this application;
FIG. 17 is a schematic structural diagram of a compression assembly of a sealing structure according to Embodiment 6 of this application;
FIG. 18 is a partial schematic structural diagram of a rotary kiln with a sealing structure according to Embodiment 6 of this application;
FIG. 19 is a schematic structural diagram of a rotary kiln according to Embodiment 7 of this application;
FIG. 20 is a schematic structural diagram of a kiln head part according to Embodiment 7 of this application;
FIG. 21 is a schematic structural enlarged view of B according to Embodiment 7 of this application;
FIG. 22 is a schematic structural diagram of a kiln tail part according to Embodiment 7 of this application;
FIG. 23 is a schematic structural enlarged view of C according to Embodiment 7 of this application; and
FIG. 24 is a partial schematic structural diagram of a sealing assembly according to Embodiment 7 of this application.

The accompanying drawings include the following reference numerals:
10. rotary kiln; 11. feed port; 12. discharge port; 13. exhaust port; 14. heating furnace; 15. heating apparatus; 16. rotary cylinder; 161. toggle plate; 162. heating cavity; 163. bottom skid; 164. front end flange; 1701. kiln head cover; 1702. kiln tail cover; 20. cooling apparatus; 30. dust removal apparatus; 31. housing; 311. tapered guide face; 32. dust removal structure; 33. gas inlet port; 34. second exhaust port; 35. outlet port; 310. first dust removal apparatus; 320. second dust removal apparatus; 330. third dust removal apparatus; 40. condenser; 50. adsorption column; 51. third exhaust port; 60. buffering apparatus; 70. first pump body structure; 80. waste gas treatment apparatus; 90. tubing; 100. fan; 110. chimney; 120. first gas lock; 130. second gas lock; and 140. second pump body structure;
1510. cyclonic separation apparatus; 1521. transport pipe; 15211. material drop space; 15212. regulating valve; 1522. dust exit pipe; 15221. first on-off valve; 15222. first airlock; 1530. material recycling apparatus; 15401. fill level detection apparatus; 1551. nozzle; 1552. sweeping pipe; 15521. second on-off valve; 1560. gas storage member; 1570. control system; 1580. wind speed detection apparatus; 1590. recycling pipe; and 1591. second airlock;
1610. scraping member; 1611. body; 1612. scraping claw; 1613. retaining plate; 1620. first connecting base; 1630. first connecting member; 1640. second connecting base; 1650. second connecting member; 1660. limiting member; Z. axial direction; and X. radial direction;
171. supporting body; 172. crushing cavity; 173. feed channel; 174. first gas introduction portion; 175. feed assembly; 1751. first movement member; 1752. second movement member; 1753. first partition cavity; 1754. first pressure detection part; 1755. first oxygen content detection part; 1756. third movement member; 1757. vent hole; 1758. second partition cavity; 176. second gas introduction portion; 177. first through opening; 178. second through opening; 179. gas exhausted port; 1710. second pressure detection part; 1711. second oxygen content detection part; 1712. cooling assembly; 17121. jacket part; 17122. cooling medium flow channel; 1713. pressure relief portion; 1714. firefighting part; 1715. temperature detection part; 1716. flame detection part; 1717. crushing cutter; 1718. emergency shut-off valve; and 1719. discharge gas locking apparatus;
18. sealing structure; 181. first sealing portion; 182. second sealing portion; 1821. first annular board; 1822. second annular board; 1823. gas inlet port; 183. third sealing portion; 1831. first connecting portion; 1832. second connecting portion; 1833. sealing member; 1834. rotary bearing; 18341. rotary bearing outer ring; 18342. rotary bearing inner ring; 18343. rolling body; 18344. sealing ring; 18345. holder; 1835. compression assembly; 18351. compression portion; 18352. compression rod; 18353. elastic member; 18354. guide rod; 184. flexible connecting member; and 185. limiting portion; and
192. end portion supporting structure; 1921. kiln head supporting structure; 19211. first supporting foundation; 19212. first supporting board group; 19213. supporting ring; 1922. kiln tail supporting structure; 19221. supporting cover; 192211. rotary bearing fixedly flange; 193. rotary bearing structure; 1931. first rotary bearing; 1932. second rotary bearing; 194. sealing assembly; 1941. sealing part; 1942. abutting part; 19421. abutting rod; 194211. limiting step; 19422. elastic member; 19423. abutting sleeve; 1943. first sealing assembly; 1944. second sealing assembly; 195. feed pipe group; 1951. feed pipe; 1952. sealing board group; 19521. first annular board; 195211. first mounting through hole; 195212. first connecting end board; 195213. second connecting end board; 19522. connecting sleeve pipe; 1953. first gas inlet pipe line; 196. second annular board; 1961. second mounting through hole; 197. guide assembly; 1971. guide track; 1972. guide block; 198. chain wheel; and 199. second gas inlet pipe line.

### DETAILED DESCRIPTION

It should be noted that the embodiments in this application and features in the embodiments may be mutually combined in case that no conflict occurs. This application is described in detail below with reference to the accompanying drawings and embodiments.

It should be noted that the unless otherwise indicated, all technical terms and scientific terms used in this application have the same meaning as commonly understood by a person of ordinary skill in the technical field to which this application belongs.

In this application, in the absence of any indication to the contrary, azimuthal terms such as "up and down" are generally used with respect to the directions shown in the accompanying drawings, or in the vertical, perpendicular, or gravitational directions; similarly, for the sake of ease of understanding and description, "left and right" are generally used with respect to the left and right as shown in the accompanying drawings; and "inside and outside" refer to the inside and outside with respect to the contours of the parts themselves, but the foregoing azimuthal terms are not intended to limit this application.

To resolve the problem of low recycling efficiency of waste lithium batteries in the prior art, this application provides a waste battery thermal desorption treatment system.

### Embodiment 1

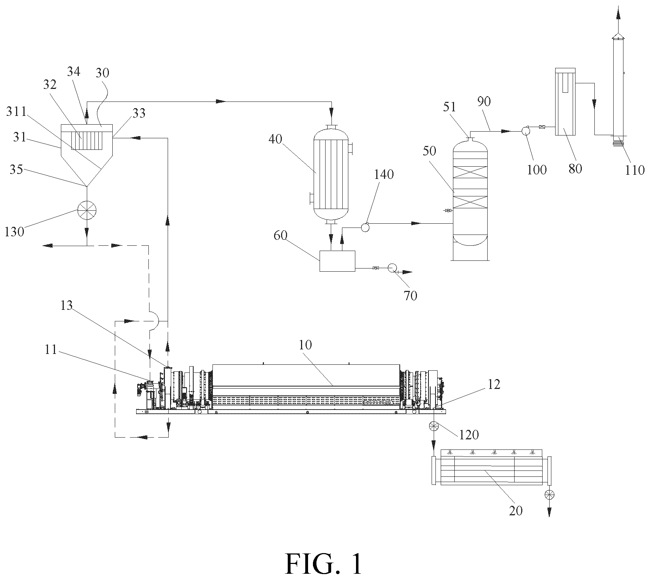

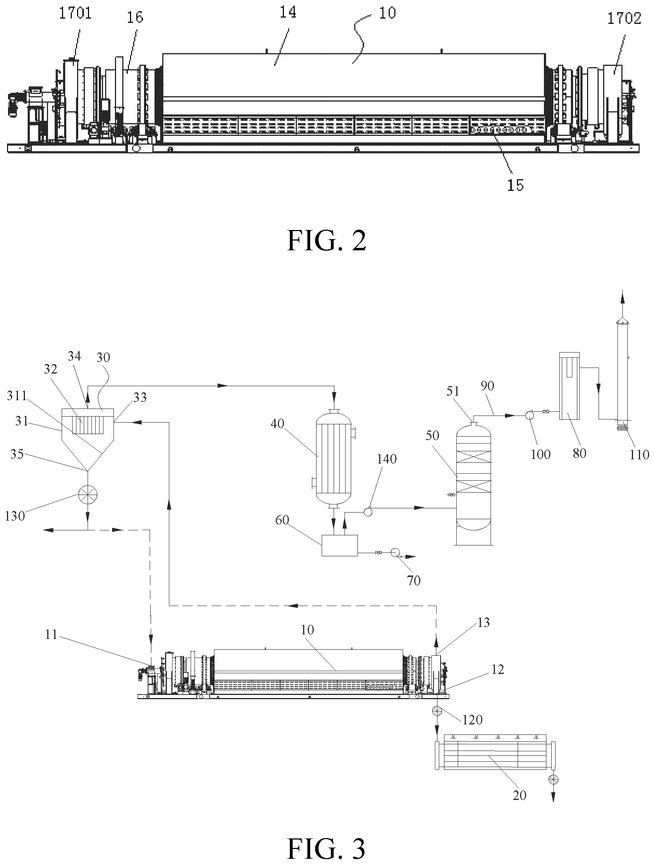

As shown in FIG. 1 and FIG. 2, the waste battery thermal desorption treatment system includes a rotary kiln 10, a dust removal apparatus 30, a condenser 40, and an adsorption column 50. The rotary kiln 10 is provided with a feed port 11, a thermal desorption cavity, a heating cavity, a discharge port 12, and a first exhaust port 13. The feed port 11 is in communication with the discharge port 12 through the thermal desorption cavity. The first exhaust port 13 is in communication with the thermal desorption cavity. At least part of the thermal desorption cavity is located in the heating cavity and is rotatably provided relative to the heating cavity. The dust removal apparatus 30 includes a housing 31 and a dust removal structure 32 disposed in the housing 31. The housing 31 is provided with a gas inlet port 33 and a second exhaust port 34 in communication with the first exhaust port 13. The dust removal structure 32 is configured to collect impurities in a gas exhausted from the first exhaust port 13, to enable gaseous components separated from the impurities in the gas to enter the second exhaust port 34. The condenser 40 is in communication with the second exhaust port 34, to condense an electrolyte constituent in the gaseous components and form an electrolyte. A defluorination agent is disposed in the adsorption column 50, to use the defluorination agent to perform dry defluorination on remaining constituents in the gaseous components. Specifically, the rotary kiln 10 in this embodiment may use an electric heating structure.

Through the application of the technical solution in this embodiment, a waste battery thermal desorption treatment system includes a rotary kiln 10, a dust removal apparatus 30, a condenser 40, and an adsorption column 50. The rotary kiln 10 is provided with a feed port 11, a thermal desorption cavity, a heating cavity, a discharge port 12, and a first exhaust port 13. The feed port 11 is in communication with the discharge port 12 through the thermal desorption cavity. The first exhaust port 13 is in communication with the thermal desorption cavity. Battery powder or a crushed battery electrode plate mixed material enter the thermal desorption cavity through the feed port 11. The thermal desorption cavity drives the mixed material located therein to rotate relative to the heating cavity, to heat the mixed material through the heating cavity uniformly, so that the uniformity of the thermal desorption treatment is improved, and the quality of a material after the thermal desorption treatment is improved. In this way, the dust removal apparatus 30 collects impurities in a gas exhausted from the rotary kiln 10, to enable gaseous components separated from the impurities in the gas to enter a second exhaust port 34 of the dust removal apparatus 30. The condenser 40 is in communication with the second exhaust port 34 and is configured to condense an electrolyte constituent in the gaseous components and form an electrolyte, and then a defluorination agent disposed in the adsorption column 50 is used to perform dry defluorination on remaining constituents in the gaseous components, to eventually form an inorganic compound like calcium fluoride, thereby resolving the problem of low recycling efficiency of waste lithium batteries in the prior art.

Compared with direct discharge of gaseous organic components to an environment in the prior art, the waste battery thermal desorption treatment system in this embodiment condenses and adsorbs organic components, to form an inorganic compound for subsequent use, so that the recycling efficiency of the battery powder or the crushed battery electrode plate mixed material is improved, and no pollution is caused to the environment.

In this embodiment, the dry defluorination of the adsorption column 50 may be used in a scenario in which fluorine content is not high.

Optionally, the defluorination agent is active Al₂O₃ or quicklime.

In this embodiment, the defluorination agent is quicklime, or calcium fluoride generated from the reaction of a fluoride and quicklime, and may be sold as a commodity after sieving and drying.

Optionally, the rotary kiln 10 includes a heating furnace 14, a heating apparatus 15, a rotary cylinder 16, a kiln head cover 1701, and a kiln tail cover 1702. The heating furnace 14 is provided with the heating cavity, and the heating apparatus 15 is disposed in the heating cavity. The rotary cylinder 16 is provided with the thermal desorption cavity. At least part of the rotary cylinder 16 extends into the heating cavity and is rotatably connected to the heating furnace 14. The kiln head cover 1701 is disposed at one end of the rotary cylinder 16. The feed port 11 is provided in the kiln head cover 1701. The kiln tail cover 1702 is disposed at the other end of the rotary cylinder 16. The discharge port 12 is disposed on the kiln tail cover 1702. The first exhaust port 13 is provided in the kiln head cover 1701 or the kiln tail cover 1702. In this way, in a process in which the rotary kiln 10 performs the thermal desorption treatment on the mixed material located therein, the rotary cylinder 16 drives the mixed material to rotate relative to the heating furnace 14, to enable the heating furnace 14 to perform uniform heating on the rotary cylinder 16, thereby improving the uniformity of thermal desorption. In addition, through the foregoing arrangement, the arrangement position of the first exhaust port 13 is more flexible, to meet different use requirements and working conditions, and also improve the processing flexibility of a worker.

As shown in FIG. 1, the first exhaust port 13 is disposed on the kiln head cover 1701, to implement the functions of kiln head feed, kiln tail output, and kiln head exhausting of the rotary kiln 10. A to-be-treated material of lithium batteries (positive electrode powder, negative electrode powder, positive-negative electrode mixed battery powder, positive and negative electrode plates, and the like) enters the feed port 11 to enter the thermal desorption cavity to perform the thermal desorption treatment.

In this embodiment, the rotary cylinder 16 and the heating furnace 14 are coaxially disposed, and the rotary cylinder 16 is rotatable around a central axis thereof by 360°.

Optionally, there are a plurality of heating apparatuses 15. The plurality of heating apparatuses 15 are spaced apart in a circumferential direction and/or an axial direction of the heating furnace 14. In this way, through the foregoing arrangement, the heating efficiency of the thermal desorption cavity by the heating apparatus 15 is improved, thereby shortening the time consumption of thermal desorption, and the arrangement of the heating apparatus 15 in the heating furnace 14 is more flexible and varied, to meet different use requirements and working conditions, and also improve the processing flexibility of a worker.

In this embodiment, the heating apparatuses 15 may use independent temperature control.

Optionally, the heating apparatus 15 is located on an inner bottom surface of the heating furnace 14, and/or, the heating apparatus 15 is an electric heating wire; or, the heating apparatus 15 includes a groups of resistors, the groups of resistors are spaced apart in the axial direction of the heating furnace 14, and each group of resistors includes 3n resistors and uses a Y or delta connection, where a meets 2 < a < 6, and n is an integer. In this way, through the foregoing arrangement, the heating apparatus 15 uses an electric heating mode, which is clean and has high heating efficiency.

In this embodiment, a is 6, 6 groups of resistors are uniformly distributed on the inner bottom surface of the heating furnace 14, and the 6 groups of resistors include a total of 54 resistors. n is 3, and each group includes 9 resistors. 3 resistors are connected in series, to perform Y or delta connection.

It should be noted that the value of a is not limited thereto, and may be adjusted according to working conditions and use requirements. Optionally, a is 3, or 4, or 5.

It should be noted that the value of n is not limited thereto, and may be adjusted according to working conditions and use requirements. Optionally, n is 1, or 2, or 4.

Optionally, the central axis of the rotary cylinder 16 is disposed tilting relative to a horizontal plane and a tilt angle is greater than or equal to 1° and less than or equal to 3°; and/or, a pressure of the thermal desorption cavity is less than or equal to 3 Kpa; and/or, an oxygen concentration in the thermal desorption cavity is less than or equal to 4%.

In this embodiment, the central axis of the rotary cylinder 16 is disposed tilting relative to the horizontal plane and the tilt angle is greater than or equal to 1° and less than or equal to 3°, the pressure of the thermal desorption cavity is less than or equal to 3 Kpa, and the oxygen concentration in the thermal desorption cavity is less than or equal to 4%. A temperature range of the thermal desorption is 100°C to 1300°C, a stop time ranges from 1 h to 2 h, and a rotational speed of the rotary cylinder 16 ranges from 1 r/min to 5 r/min. In a process of the thermal desorption, an inert gas is filled for protection, to ensure that the oxygen concentration in the thermal desorption cavity is less than or equal to 4%, thereby preventing the rotary kiln 10 from a flash explosion or an explosion.

As shown in FIG. 1, the dust removal structure 32 is a metal membrane filter element. The housing 31 is further provided with a tapered guide face 311. An outlet port 35 is provided at a taper peak of the tapered guide face 311. In a height direction of the dust removal structure 32, the outlet port 35 is located below the gas inlet port 33. The gas inlet port 33 is located between the outlet port 35 and the second exhaust port 34. In this way, the tapered guide face 311 is configured to guide dust and a solid substance, to ensure that the dust and the solid substance filtered from the metal membrane filter element can be smoothly discharged from the outlet port 35, thereby improving the dust removal efficiency of the dust removal apparatus 30. In addition, through the foregoing arrangement, it is ensured that the dust and the solid substance may enter the dust removal apparatus 30 and be discharged from the dust removal apparatus 30 under the weight thereof, and it is not necessary to additionally arrange a power apparatus, thereby reducing the energy consumption of the dust removal apparatus 30.

Specifically, the gaseous organic components (which are mainly small molecule gas components after the thermal desorption of electrolyte components and the PVDF) and dust pass through the gas inlet port to enter the dust removal apparatus 30, and the metal membrane filter element traps dust, to perform purification and dust removal. The gaseous organic components pass through the second exhaust port 34 to enter the condenser 40 for condensation.

In this embodiment, a temperature range in the dust removal apparatus 30 is 200°C to 300°C, to prevent condensation and blockage of organic components inside.

In this embodiment, at least part of the outlet port 35 is in communication with the feed port 11. In this way, dust and solid phases collected by the metal membrane filter element may enter the rotary kiln 10 again to perform thermal desorption, thereby further improving the recycling rate of an output material.

As shown in FIG. 1, the waste battery thermal desorption treatment system further includes a cooling apparatus 20, a buffering apparatus 60, and a first pump body structure 70. The cooling apparatus 20 is in communication with the discharge port 12, to cool and reduce the temperature of a material after thermal desorption is completed. The buffering apparatus 60 is in communication with the condenser 40. The buffering apparatus 60 is configured to collect the electrolyte formed after condensation. The first pump body structure 70 is in communication with the buffering apparatus 60, to pump the electrolyte buffered in the buffering apparatus 60 outside the waste battery thermal desorption treatment system. In this way, volatile organic components are condensed by the condenser 40 to form an electrolyte, and the electrolyte is buffered in the buffering apparatus 60. When the foregoing electrolyte perform needs to be used, the first pump body structure 70 may pump the electrolyte into a preset apparatus for use, thereby further improving the recycling efficiency of the waste battery thermal desorption treatment system.

In this embodiment, a range of a condensation temperature of the condenser 40 is 20 °C to 35°C.

As shown in FIG. 1, the adsorption column 50 is provided with a third exhaust port 51. The waste battery thermal desorption treatment system further includes a waste gas treatment apparatus 80. The waste gas treatment apparatus 80 is in communication with the third exhaust port 51, to recycle or burn a gas exhausted from the third exhaust port 51. In this way, gas components after purification by the adsorption column 50 are recycled or burned by the waste gas treatment apparatus 80 and discharged through a chimney 110 to the atmosphere, thereby preventing a waste gas from polluting the environment.

As shown in FIG. 1, the waste battery thermal desorption treatment system further includes a tubing 90 and a fan 100. Two ends of the tubing 90 are respectively in communication with the third exhaust port 51 and the waste gas treatment apparatus 80. The fan 100 is disposed on the tubing 90, to suck a waste gas in the tubing 90 into the waste gas treatment apparatus 80. In this way, through the foregoing arrangement of the fan 100, in one aspect, it is ensured that the gas components after the purification by the adsorption column 50 can pass through the tubing 90 to smoothly enter the waste gas treatment apparatus 80, thereby improving the flowing smoothness of the gas in the waste battery thermal desorption treatment system. In another aspect, the treatment efficiency of the waste gas treatment apparatus 80 is improved.

Optionally, the adsorption column 50 has one stage or a plurality of stages. When the adsorption column 50 has a plurality of stages, the plurality of stages of the adsorption column 50 are disposed in parallel or in series.

As shown in FIG. 1, the waste battery thermal desorption treatment system further includes a first gas lock 120 and a second gas lock 130. The first gas lock 120 is disposed between the cooling apparatus 20 and the discharge port 12, and the second gas lock 130 is disposed at the outlet port 35, to improve airtightness.

As shown in FIG. 1, the waste battery thermal desorption treatment system further includes a second pump body structure 140. The second pump body structure 140 is disposed between the condenser 40 and the adsorption column 50, to pump the electrolyte into the adsorption column 50.

### Embodiment 2

A difference between the waste battery thermal desorption treatment system in Embodiment 2 and that in Embodiment 1 lies in that the arrangement position of the first exhaust port 13 is different.

As shown in FIG. 3, the first exhaust port 13 is disposed on the kiln tail cover 1702, to implement the functions of kiln head feed, kiln tail output, and kiln tail exhausting of the rotary kiln 10. A to-be-treated material of lithium batteries (positive electrode powder, negative electrode powder, positive-negative electrode mixed battery powder, positive and negative electrode plates, and the like) enters the feed port 11 to enter the thermal desorption cavity to perform the thermal desorption treatment.

As can be seen from the foregoing description, the foregoing embodiment in this application implements the following technical effect:
A waste battery thermal desorption treatment system includes a rotary kiln, a dust removal apparatus, a condenser, and an adsorption column. The rotary kiln is provided with a feed port, a thermal desorption cavity, a heating cavity, a discharge port, and a first exhaust port. The feed port is in communication with the discharge port through the thermal desorption cavity. The first exhaust port is in communication with the thermal desorption cavity. Battery powder or a crushed battery electrode plate mixed material enter the thermal desorption cavity through the feed port. The thermal desorption cavity drives the mixed material located therein to rotate relative to the heating cavity, to heat the mixed material through the heating cavity uniformly, so that the uniformity of the thermal desorption treatment is improved, and the quality of a material after the thermal desorption treatment is improved. In this way, the dust removal apparatus collects impurities in a gas exhausted from the rotary kiln, to enable gaseous components separated from the impurities in the gas to enter a second exhaust port of the dust removal apparatus. The condenser is in communication with the second exhaust port and is configured to condense an electrolyte constituent in the gaseous components and form an electrolyte, and then a defluorination agent disposed in the adsorption column is used to perform dry defluorination on remaining constituents in the gaseous components, to eventually form an inorganic compound like calcium fluoride, thereby resolving the problem of low recycling efficiency of waste lithium batteries in the prior art.

Compared with direct discharge of gaseous organic components to an environment in the prior art, the waste battery thermal desorption treatment system in this application condenses and adsorbs organic components, to form an inorganic compound for subsequent use, so that the recycling efficiency of the battery powder or the crushed battery electrode plate mixed material is improved, and no pollution is caused to the environment.

### Embodiment 3

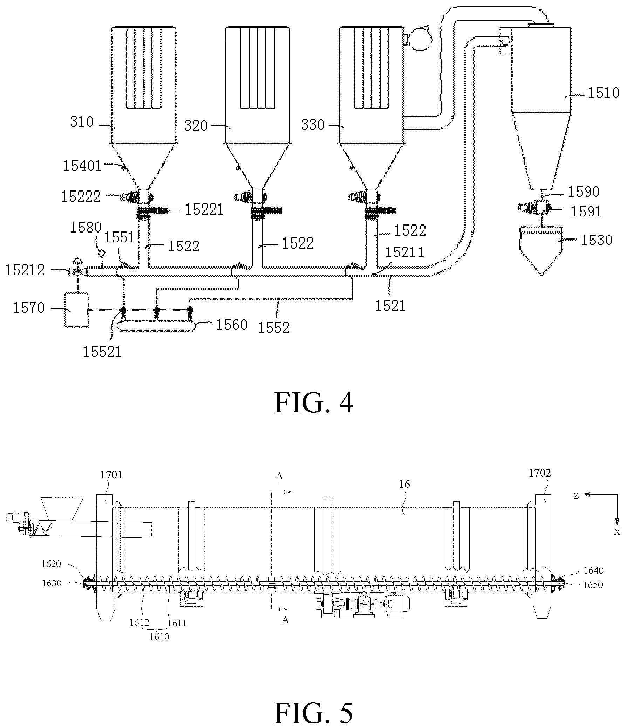

As shown in FIG. 4, the waste battery thermal desorption treatment system includes at least two dust removal apparatuses 30. A dust collection system of the waste battery thermal desorption treatment system further includes a cyclonic separation apparatus 1510, a transport pipe 1521, a material recycling apparatus 1530, and the at least two dust removal apparatuses 30. Optionally, the cyclonic separation apparatus 1510 may be a cyclonic separator. The dust removal apparatus 30 may be a bag-type dust remover, or the like. The material recycling apparatus 1530 may be a recycling bin.

The at least two dust removal apparatuses include a first dust removal apparatus 310 and a second dust removal apparatus 320. An outlet port of the first dust removal apparatus 310 is in communication with a first end of the transport pipe 1521. An outlet port of the second dust removal apparatus 320 is in communication with a second end of the transport pipe 1521. A third end of the transport pipe 1521 is in communication with a gas intake port of the cyclonic separation apparatus 1510. An outlet port of the cyclonic separation apparatus 1510 is in communication with an entrance of the material recycling apparatus 1530. In this embodiment of this application, the outlet port of the first dust removal apparatus 310 and the outlet port of the second dust removal apparatus 320 may be in communication with the gas intake port of the cyclonic separation apparatus 1510 through a transport tubing. When a material in the first dust removal apparatus 310 and the second dust removal apparatus 320 is transferred to the material recycling apparatus 1530, it is only necessary to unload the material in the first dust removal apparatus 310 and the second dust removal apparatus 320 into the transport tubing, and then a transport gas is introduced to a gas transport end of the transport pipe 1521, to transport the material in the transport tubing to the cyclonic separation apparatus 1510. After cyclonic separation, the material enters the material recycling apparatus 1530. As can be seen, in this embodiment of this application, the material in the first dust removal apparatus 310 and the second dust removal apparatus 320 may be transferred into the material recycling apparatus 1530 through the transport gas, and operations are simple. In addition, through the transport of the material using the transport tubing, an entire process of material transport may be performed in a sealed environment. In this way, the problem that the material flies and causes pollution to the environment can be resolved. It should be noted that the transport pipe 1521 may be one pipe or may be formed by combining a plurality of pipes.

Optionally, the outlet port of the cyclonic separation apparatus 1510 and the entrance of the material recycling apparatus 1530 may be in switchable communication. Specifically, the outlet port of the cyclonic separation apparatus 1510 and the entrance of the material recycling apparatus 1530 are in communication through a recycling pipe 1590. A second airlock 1591 is disposed on the recycling pipe 1590. The second airlock 1591 can prevent wind in the cyclonic separation apparatus 1510 from entering the material recycling apparatus 1530, to ensure a stable airflow in the cyclonic separation apparatus 1510, thereby ensuring the effect of cyclonic separation, and a material in the cyclonic separation apparatus 1510 can be further unloaded into the material recycling apparatus 1530.

A first airlock 15222 and the second airlock 1591 have the same structure. Each airlock includes a housing, a material unloading shaft, a driving member, and a vane board. The driving member is connected to the material unloading shaft, to drive the material unloading shaft to rotate. The material unloading shaft is rotatably disposed in the housing. A plurality of vane boards are disposed on a peripheral surface of the material unloading shaft in a circumferential direction thereof. An end of the vane board away from the material unloading shaft is connected to an inner wall of the housing in a sealed manner.

When the separation efficiency of the cyclonic separation apparatus 1510 is not high, part of the material is discharged through a gas outlet of the cyclonic separation apparatus 1510, which causes air pollution. If the material is a recyclable material, the recycling rate of the material is reduced. In an optional embodiment, the at least two dust removal apparatuses further include a third dust removal apparatus 330. An outlet port of the third dust removal apparatus 330 is in communication with a fourth end of the transport pipe 1521. A gas intake port of the third dust removal apparatus 330 is in communication with the gas outlet of the cyclonic separation apparatus 1510. The third dust removal apparatus 330 is disposed in this embodiment of this application. A waste gas exhausted from the cyclonic separation apparatus 1510 may be introduced into the gas intake port of the third dust removal apparatus 330. Therefore, the third dust removal apparatus 330 may trap a material discharged from the gas outlet of the cyclonic separation apparatus 1510. When the material in the third dust removal apparatus 330 is transferred into the material recycling apparatus 1530, it is only necessary to unload the material in the third dust removal apparatus 330 into the transport tubing, and then the transport gas is introduced into the second end of the transport pipe 1521, to transport the material in the transport tubing to the cyclonic separation apparatus 1510. After cyclonic separation, the material enters the material recycling apparatus 1530. As can be seen, the third dust removal apparatus 330 traps a material that has not been separated by the cyclonic separation apparatus 1510, and transports the part of material to the cyclonic separation apparatus 1510 again through the transport pipe 1521. That is, the cyclonic separation apparatus 1510 and the third dust removal apparatus 330 work together to cyclically separate and trap a material, to avoid causing air pollution and improve the recycling rate of the material.

Optionally, the outlet port of the first dust removal apparatus 310 and the first end of the transport pipe 1521 may be in switchable communication, and the outlet port of the second dust removal apparatus 320 and the second end of the transport pipe 1521 may be in switchable communication. The first dust removal apparatus 310 is used as an example. When the first dust removal apparatus 310 is in an operating state, if the outlet port of the first dust removal apparatus 310 and the first end of the transport pipe 1521 are in direct communication, a gas may rush between the first dust removal apparatus 310 and the transport pipe 1521, making an airflow in the first dust removal apparatus 310 and the transport pipe 1521 unstable. In this case, the dust removal efficiency of the first dust removal apparatus 310 and the transport efficiency of the transport pipe 1521 may be reduced. In this embodiment, the outlet port of the first dust removal apparatus 310 and the transport pipe 1521 may be in a cut-off state. In this way, the gas can be prevented from rushing between the first dust removal apparatus 310 and the transport pipe 1521. Specifically, the outlet port of the first dust removal apparatus 310 and the second dust removal apparatus 320 are in communication with the transport pipe 1521 through a dust exit pipe 1522, and an airlock valve may be disposed on the dust exit pipe 1522. The first dust removal apparatus 310 is used as an example. When the first dust removal apparatus 310 is operating, the airlock valve may be closed to prevent the gas from rushing between the first dust removal apparatus 310 and the transport pipe 1521. When the material in the first dust removal apparatus 310 needs to be transported to the material recycling apparatus 1530, the first dust removal apparatus 310 may be closed. That is, a dust removal fan equipped on the first dust removal apparatus 310 is turned off, the airlock valve is opened, the airlock valve is closed after the material is unloaded to the transport pipe 1521, and then the transport gas is introduced into the gas transport end of the transport pipe 1521. In this way, the risk that a gas rushes between the transport pipe 1521 and the first dust removal apparatus 310 can be reduced.

In the previous embodiment, although the airlock valve can prevent a gas from rushing between the dust removal apparatus and the transport pipe 1521, the dust removal apparatus needs to be closed. In this way, the dust removal apparatus cannot implement continuous production, thereby reducing the operating efficiency of the dust removal apparatus. Therefore, in an optional embodiment, an outlet port of each dust removal apparatus is in communication with the transport pipe 1521 through the dust exit pipe 1522, and the first airlock 15222 is disposed on the dust exit pipe 1522. In this embodiment, the first airlock 15222 is disposed on the dust exit pipe 1522. The first airlock 15222 can prevent a gas from rushing between the dust removal apparatus and the transport pipe 1521, and the first airlock 15222 has a material unloading function. In a case that the dust removal apparatus runs, while ensuring that the dust exit pipe 1522 is cut off, the first airlock 15222 can unload the material in the dust removal apparatus into the transport pipe 1521, thereby ensuring a stable airflow between the dust removal apparatus and the transport pipe 1521, so that the gas in the dust removal apparatus is prevented from entering the transport pipe 1521 and interfering with transport of a material by the transport pipe 1521, and the gas in the transport pipe 1521 can also be prevented from entering the dust removal apparatus and interfering with dust removal by the dust remover.

It should be noted that, in a case that the at least two dust removal apparatuses include the first dust removal apparatus 310 and the second dust removal apparatus 320, the outlet ports of the first dust removal apparatus 310 and the second dust removal apparatus 320 are in communication with the transport pipe 1521 through the dust exit pipe 1522 provided with the first airlock 15222. Based on the previous embodiment, in a case that the at least two dust removal apparatuses further include the third dust removal apparatus 330, the outlet port of the third dust removal apparatus 330 may also be in communication with the transport pipe 1521 through one dust exit pipe 1522 provided with the first airlock 15222. Based on the previous embodiment, in a case that the at least two dust removal apparatuses further include a plurality of other dust removers, outlet ports of the plurality of other dust removers are in communication with the transport pipe 1521 through the dust exit pipe 1522 provided with the first airlock 15222.

The first airlock 15222 may wear in a running process, after the first airlock 15222 wears, a gas may rush between the dust removal apparatus and the transport pipe 1521. In an optional embodiment, a first on-off valve 15221 is further disposed at the dust exit pipe 1522, and the first airlock 15222 is disposed between the first on-off valve 15221 and an outlet port of the dust removal apparatus. The first on-off valve 15221 in this embodiment may cut off the dust exit pipe 1522, and is only opened when the dust removal apparatus unloads a material. In this way, in a case that the first airlock 15222 wears, the first on-off valve 15221 may prevent the gas from rushing between the dust removal apparatus and the transport pipe 1521 most of the time. Optionally, the first on-off valve 15221 may be a ball valve, a gate valve, a butterfly valve, or the like.

In an optional embodiment, a fill level detection apparatus 15401 is disposed on at least one of the at least two dust removal apparatuses. The fill level detection apparatus 15401 is disposed in this embodiment. When the fill level detection apparatus 15401 detects that a fill level reaches a preset height, the first airlock 15222 may be turned on to unload a material. It should be noted that, the first airlock 15222 may be manually controlled to be turned on to unload a material. In addition, this embodiment may be combined with a control system 1570 below. In this case, the first airlock 15222 and the fill level detection apparatus 15401 are electrically connected to the control system 1570. After detecting that the fill level reaches the preset height, the fill level detection apparatus 15401 may send a signal to the control system 1570, and then the control system 1570 may control the first airlock 15222 to be turned on. Further, when the first on-off valve 15221 is further disposed on the dust exit pipe 1522, the control system 1570 is electrically connected to the first on-off valve 15221. When the fill level reaches the preset height, the control system 1570 simultaneously controls the first on-off valve 15221 to be turned on.

In an optional embodiment, the dust collection system further includes a sweeping apparatus, an outlet port of each dust removal apparatus is in communication with the transport pipe 1521 through a dust exit pipe 1522, the transport pipe 1521 is provided with at least two material drop spaces 15211, the at least two material drop spaces 15211 are respectively opposite to the dust exit pipes 1522 in a one-to-one correspondence, the sweeping apparatus is provided with at least one blowing port, and the blowing port is opposite to the material drop spaces 15211. In a case that a material trapped by the dust removal apparatus has high humidity, the mass of the material is large. Therefore, after the material accumulates in the material drop spaces 15211, it is difficult for the transport gas in the transport pipe 1521 to disperse the material, and as a result the material is blocked at the material drop spaces 15211. After the sweeping apparatus is disposed in this embodiment of this application, a gas inlet port of the sweeping apparatus may be in communication with a gas storage member 1560 with a high pressure, to disperse the material blocked in the material drop spaces 15211. It should be noted that, in a case that the sweeping apparatus has only one blowing port, the blowing port may be opposite to one of the material drop spaces 15211. In a case that the sweeping apparatus is provided with a plurality of blowing ports, the blowing ports may be opposite to the material drop spaces 15211 in a one-to-one correspondence, or a plurality of blowing ports are disposed near one material drop spaces 15211. The number and arrangement positions of the blowing ports are not limited in this application.

An angle between a blowing direction of the sweeping apparatus and a transport direction of the transport pipe 1521 at the material drop spaces 15211 may be a right corner or an obtuse angle. In this case, a direction of a gas blown by the blowing port of the sweeping apparatus is perpendicular to a direction of the transport gas in the transport pipe 1521, or a gas blown by the blowing port moves in a direction opposite to the transport direction of the transport pipe 1521 at the material drop spaces 15211. In this case, the transport gas is hindered from transporting a material. In an optional embodiment, the angle between the blowing direction of the sweeping apparatus and the transport direction of the transport pipe 1521 at the material drop spaces 15211 is an acute angle, or the angle is 0°. In this embodiment, the gas blown by the blowing port of the sweeping apparatus moves in a direction the same as the transport direction of the transport pipe 1521 at the material drop spaces 15211. In this way, instead of hindering the transport gas from transporting a material, the gas blown by the blowing port can further assist the transport gas in transporting the material, thereby improving the transport efficiency of the material. It should be noted that, the blowing direction of the sweeping apparatus is a direction of the gas blown from the blowing port.

In an optional embodiment, at least part of the sweeping apparatus is disposed outside the transport pipe 1521. When the sweeping apparatus is located in the transport pipe 1521, the sweeping apparatus hinders the transport gas from transporting a material. Therefore, when the part of the sweeping apparatus located outside the transport pipe 1521 is larger, the sweeping apparatus less hinders the transport gas. When the sweeping apparatus is completely located outside the transport pipe 1521, the sweeping apparatus does not hinder the transport gas from transporting a material.

The sweeping apparatus may include a blowing tubing. An outlet of the blowing tubing is the foregoing blowing port, and an entrance of the blowing tubing is connected to the external gas storage member 1560. When this mode is used, a gas pressure of a gas in the gas storage member 1560 needs to be large to easily disperse the blocked material. In another optional embodiment, the dust collection system further includes the gas storage member 1560. The sweeping apparatus includes a nozzle 1551. The nozzle 1551 and the gas storage member 1560 may be in switchable communication. A blowing port of the nozzle 1551 is opposite to the material drop spaces 15211. The blowing port of the nozzle 1551 is the blowing port of the sweeping apparatus. After the nozzle 1551 is disposed, after a gas from the gas storage member 1560 passes through the nozzle 1551, an airflow with a strong impact force may be generated, to improve a dispersion effect for a blocked material. As can be seen, compared with the previous embodiment, in this embodiment, there is a low requirement for a gas pressure of a gas in the gas storage member 1560, and the dispersion effect for the blocked material is better.

In an optional embodiment, the dust collection system further includes the control system 1570 and a wind speed detection apparatus 1580. The wind speed detection apparatus 1580 is disposed at the transport pipe 1521. That is, the wind speed detection apparatus 1580 is configured to detect a wind speed of the transport gas in the transport pipe 1521. A regulating valve 15212 is disposed at a fifth end of the transport pipe 1521. The sweeping apparatus further includes a sweeping pipe 1552. The nozzle 1551 and the gas storage member 1560 are in communication through the sweeping pipe 1552. A second on-off valve 15521 is disposed on the sweeping pipe 1552. The control system 1570 is electrically connected to the regulating valve 15212, the wind speed detection apparatus 1580, and the second on-off valve 15521. A specific operation process is as follows. When the wind speed detection apparatus 1580 detects that the wind speed of the transport gas in the transport pipe 1521 is lower than a preset wind speed, the control system 1570 may control the regulating valve 15212, to increase the openness of the regulating valve 15212. In a case that the openness of the regulating valve 15212 is adjusted to the maximum and the wind speed detection apparatus 1580 detects that the wind speed is still lower than the preset wind speed, the control system 1570 may control the second on-off valve 15521 to be opened, and the gas in the gas storage member 1560 is sprayed out from the blowing port of the nozzle 1551, to rush away the blocked material. As can be seen, the control system 1570 in this embodiment of this application may use a signal outputted by the wind speed detection apparatus 1580 to automatically control the openness of the regulating valve 15212 and the opening and closing of the second on-off valve 15521. In this way, a material blocked at the material drop spaces 15211 of the transport pipe 1521 can be unblocked in time.

### Embodiment 4

Referring to FIG. 5 to FIG. 9, the waste battery thermal desorption treatment system in this embodiment of the present disclosure further includes a self-cleaning mechanism used for the rotary kiln 10. The rotary kiln 10 includes a rotary cylinder 16. The self-cleaning mechanism includes a scraping member 1610 movably disposed in the rotary cylinder 16. The scraping member 1610 includes a body 1611 and a plurality of scraping claws 1612. The body 1611 extends in an axial direction Z of the rotary cylinder 16. The plurality of scraping claws 1612 are disposed around a periphery of the body 1611. The scraping claws 1612 are configured to scrape off a material deposit on an inner wall of the rotary cylinder 16.

In this embodiment, the scraping member 1610 is disposed in the rotary kiln 10, to use the movably configured scraping member 1610 to scrape off the material deposit on the inner wall of the rotary cylinder 16, thereby implementing cleaning of the rotary cylinder 16, and improving the production efficiency of the rotary kiln 10. Compared with cleaning work of a conventional rotary kiln 10, a working procedure of first shutting down the rotary kiln 10, performing manual cleaning, and then turning on the kiln again is required. In an operating process of the rotary kiln 10, the self-cleaning mechanism provided in the present disclosure may directly clear the material deposit on the inner wall of the rotary cylinder 16, so that the working procedure of shutting down the rotary kiln 10 and turning on the kiln again is omitted. In this way, a cleaning time of the rotary kiln 10 is greatly shortened, thereby improving the production efficiency of the rotary kiln 10.

The self-cleaning mechanism discussed above may be part of the rotary kiln 10, and the self-cleaning mechanism is mounted on the rotary cylinder 16. For a specific structure of the self-cleaning mechanism, refer to the foregoing embodiments. The rotary kiln 10 uses all technical solutions in all the foregoing embodiments, and therefore has all beneficial effects brought by the technical solutions in the foregoing embodiments. Details are not described again herein.

In this embodiment, the rotary kiln 10 includes the rotary cylinder 16, the kiln head cover 1701, and the kiln tail cover 1702. The kiln head cover 1701 and the kiln tail cover 1702 are respectively configured at two ends of the rotary cylinder 16 to seal the rotary cylinder 16, to form a closed working space inside the rotary cylinder 16. The rotary cylinder 16 is disposed tilting, to improve the working efficiency of drying, burning, pyrolysis, decomposition, and the like of wastes by the rotary kiln 10.

Specifically, the scraping member 1610 is configured as a combination member that at least includes the body 1611 and the plurality of scraping claws 1612. The plurality of scraping claws 1612 are configured on a peripheral side of the body 1611. The body 1611 extending in the axial direction Z of the rotary cylinder 16 effectively increases an area of contact between the scraping claws 1612 and the rotary cylinder 16 in the axial direction Z, which facilitates large area clearing of the material deposit attached on the inner wall of the rotary cylinder 16 by the scraping member 1610, shortens the cleaning time of the rotary kiln 10, and improves the cleaning efficiency of the rotary kiln 10.

In an example, the body 1611 of the scraping member 1610 is a cylindrical structure, and the plurality of scraping claws 1612 are configured on a circumference of the body 1611. As an example rather than limitation, there are three scraping claws 1612. The three scraping claws 1612 are uniformly configured at the circumference of the cylindrical body 1611 with an axial center of the body 1611 as the center of circle, to form a fan blade structure. In other embodiments, a plurality of fan blade structures are configured on the body 1611, and the plurality of fan blade structures are spaced apart in the axial direction Z of the body 1611.

In a possible implementation, the plurality of scraping claws 1612 are spirally disposed around the body 1611, and the plurality of scraping claws 1612 are connected end to end to form a spring-shaped structure.

In this embodiment, an arrangement manner of the scraping claws 1612 is set to improve a scraping effect of the scraping member 1610. Specifically, the plurality of scraping claws 1612 are spirally disposed at the circumference of the body 1611, and form a spring-shaped structure along the periphery of the body 1611. In this way, the area of contact between the scraping claws 1612 and the inner wall of the rotary cylinder 16 is increased, thereby improving the cleaning efficiency and the cleaning effect.

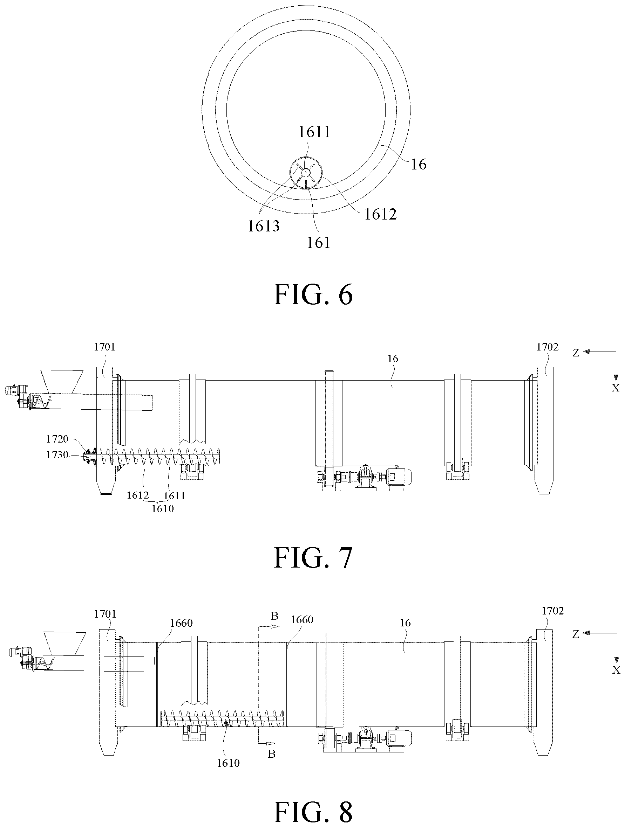

Referring to FIG. 5 and FIG. 6, in a possible implementation, a toggle plate 161 extending in a radial direction X of the rotary cylinder 16 is disposed on the inner wall of the rotary cylinder 16. The scraping member 1610 further includes a retaining plate 1613 disposed corresponding to the toggle plate 161. The retaining plate 1613 is connected to the body 1611. The retaining plate 1613 and the scraping member 1610 are spaced apart.

In this embodiment, a specific structure of the scraping member 1610 is disposed, to optimize a cooperation manner of the scraping member 1610 and the rotary cylinder 16. Specifically, the scraping member 1610 is configured as a combination member that at least includes the body 1611, the plurality of scraping claws 1612, and the retaining plate 1613. The retaining plate 1613 and the plurality of scraping claws 1612 are both configured on the peripheral side of the body 1611. The retaining plate 1613 and the scraping claws 1612 are spaced apart, to reduce mutual interference between the retaining plate 1613 and the scraping claws 1612. In addition, the toggle plate 161 is configured on the inner wall of the rotary cylinder 16. The toggle plate 161 is configured to toggle the retaining plate 1613 on the scraping member 1610. In this way, even if there is no action of an external force, the scraping member 1610 can still be toggled by the toggle plate 161 to rotate. The rotating scraping claws 1612 may scrape and clean off the material deposit accumulated on the inner wall of the rotary cylinder 16.

In an example, a plurality of toggle plates 161 are provided, and the plurality of toggle plates 161 are distributed in the axial direction Z of the rotary cylinder 16. A plurality of retaining plates 1613 are disposed, the plurality of retaining plate 1613 are distributed in the axial direction Z of the body 1611, and the plurality of retaining plate 1613 are disposed in a one-to-one correspondence to the plurality of toggle plates 161.

Referring to FIG. 6, in a possible implementation, a side of the retaining plate 1613 away from the body 1611 is lower than or flush with a side of the scraping claws 1612 away from the body 1611.

In this embodiment, the size of the retaining plate 1613 is set to improve a cleaning effect of the scraping member 1610. Specifically, to arrange the scraping claws 1612 tightly close to the inner wall of the rotary cylinder 16 to improve the scraping effect, the side of the retaining plate 1613 away from the body 1611 is disposed lower than or flush with the side of the scraping claws 1612 away from the body 1611. In this way, a front end of the retaining plate 1613 is located inside the scraping claws 1612, and the toggle plate 161 needs to partially extend into the plurality of scraping claws 1612, to toggle the retaining plate 1613. A spacing between the scraping claws 1612 and the inner wall of the rotary cylinder 16 is shortened, so that the scraping claws 1612 scrape off the material deposit on the inner wall of the rotary cylinder 16 more cleanly and thoroughly, to achieve a better cleaning effect.

Referring to FIG. 7, in a possible implementation, the rotary kiln 10 further includes a kiln head cover 1701 disposed at a front end of the rotary cylinder 16 and a kiln tail cover 1702 disposed at a tail end of the rotary cylinder 16. The self-cleaning mechanism further includes a first connecting base 1620 and a first connecting member 1630. The first connecting base 1620 is connected to an outer side of the kiln head cover 1701 or the kiln tail cover 1702, and the first connecting member 1630 is movably connected to the first connecting base 1620 and the scraping member 1610.

In this embodiment, a specific structure of the self-cleaning mechanism is disposed, to optimize a cooperation manner of the scraping member 1610 and the rotary cylinder 16. Specifically, the self-cleaning mechanism is configured as a combination member that at least includes the scraping member 1610, the first connecting base 1620, and the first connecting member 1630. The first connecting base 1620 is configured on an outer side of the rotary kiln 10, the scraping member 1610 is configured on an inner side of the rotary kiln 10, and the first connecting member 1630 is configured to be movably connected to the first connecting base 1620 and the scraping member 1610. In this way, the rigidity of the kiln head cover 1701 or the kiln tail cover 1702 is improved by using the first connecting base 1620, thereby improving the supporting stability of the scraping member 1610.

In an example, the first connecting base 1620 is a bearing holder, the first connecting member 1630 is a bearing member, and the first connecting member 1630 is embedded in the first connecting base 1620. The body 1611 of the scraping member 1610 is a rotating shaft, one end of the body 1611 is rotatably connected to the first connecting member 1630, and the other end of the body 1611 is suspended. During working, the rotary cylinder 16 rotates clockwise. In this case, the scraping member 1610 rotates reversely by using a frictional force between the scraping member and the inner wall of the rotary cylinder 16, to implement clearing of the material deposit accumulated on the inner wall of the rotary cylinder 16.

In another example, the first connecting base 1620 is a bearing holder, the first connecting member 1630 is a shaft member, one end of the first connecting member 1630 is fixedly connected to the body 1611 of the scraping member 1610, and the other end of the first connecting member 1630 is rotatably connected in the first connecting base 1620. In this way, the first connecting member 1630 rotates to drive the scraping member 1610 to rotate. During working, the rotary cylinder 16 rotates clockwise. In this case, the scraping member 1610 rotates reversely by using a frictional force between the scraping member and the inner wall of the rotary cylinder 16, and drives the first connecting member 1630 to rotate reversely, to implement clearing of the material deposit accumulated on the inner wall of the rotary cylinder 16.

In an example, the scraping member 1610 is disposed near a bottom of the rotary kiln 10. That is, the scraping member 1610 may be configured above a bottom wall of the rotary cylinder 16, and a certain gap is formed between the scraping claws 1612 of the scraping member 1610 and the bottom wall of the rotary cylinder 16. In this way, energy consumption is reduced while a cleaning effect is ensured. Certainly, in other embodiments, the scraping member 1610 may be further configured to be in a state of abutting against the bottom wall of the rotary cylinder 16. That is, the scraping claws 1612 of the scraping member 1610 abut against the bottom wall of the rotary cylinder 16, to improve the efficiency of scraping off a material deposit by the scraping member 1610, thereby improving the cleaning effect of the scraping member 1610.

Referring to FIG. 5 and FIG. 6, in a possible implementation, the rotary kiln 10 further includes a kiln head cover 1701 disposed at a front end of the rotary cylinder 16 and a kiln tail cover 1702 disposed at a tail end of the rotary cylinder 16, and the self-cleaning mechanism further includes:
a first connecting base 1620, connected to an outer side of the kiln head cover 1701;
a second connecting base 1640, connected to an outer side of the kiln tail cover 1702;
a first connecting member 1630, movably connected to the first connecting base 1620 and one end of the scraping member 1610; and
a second connecting member 1650, movably connected to the second connecting base 1640 and the other end of the scraping member 1610.

In this embodiment, a specific structure of the self-cleaning mechanism is disposed, to optimize a cooperation manner of the scraping member 1610 and the rotary cylinder 16. Specifically, the self-cleaning mechanism is configured as a combination member that at least includes the scraping member 1610, the first connecting base 1620, the first connecting member 1630, the second connecting base 1640, and the second connecting member 1650. The first connecting base 1620 and the second connecting base 1640 are configured on an outer side of the rotary kiln 10, the scraping member 1610 is configured on an inner side of the rotary kiln 10, and the first connecting member 1630 is configured to be movably connected to the first connecting base 1620 and one end of the scraping member 1610. The second connecting member 1650 is configured to be movably connected to the second connecting base 1640 and the other end of the scraping member 1610. In this way, the rigidity of the kiln head cover 1701 by using the first connecting base 1620, and the rigidity of the kiln tail cover 1702 is improved by using the second connecting base 1640, thereby improving the supporting stability of the scraping member 1610.

In an example, the first connecting base 1620 is a bearing holder, the first connecting member 1630 is a bearing member, and the first connecting member 1630 is embedded in the first connecting base 1620. The second connecting base 1640 is a bearing holder, the second connecting member 1650 is a bearing member, and the second connecting member 1650 is embedded in the second connecting base 1640. The body 1611 of the scraping member 1610 is a rotating shaft, one end of the body 1611 is rotatably connected to the first connecting member 1630, and the other end of the body 1611 is connected to the second connecting member 1650. In this way, a cleaning region is formed near a position close to the bottom wall of the rotary cylinder 16, to clean the inner wall of the rotating rotary cylinder 16.

In a possible implementation, the self-cleaning mechanism further includes a driving member (not shown in the figure), and the driving member is configured to drive the first connecting member 1630 to rotate.

In this embodiment, a specific structure of the self-cleaning mechanism is disposed, to optimize a movement manner of the scraping member 1610. Specifically, the self-cleaning mechanism is configured to at least include a combination member of the scraping member 1610, the first connecting base 1620, the first connecting member 1630, and the driving member. In this way, the driving member may drive the scraping member 1610 to rotate, thereby improving the scraping effect of the scraping member 1610. As an example rather than limitation, the driving member is a driving motor.

In an example, the self-cleaning mechanism includes the scraping member 1610, the first connecting base 1620, the first connecting member 1630, the second connecting base 1640, the second connecting member 1650, and the driving member.

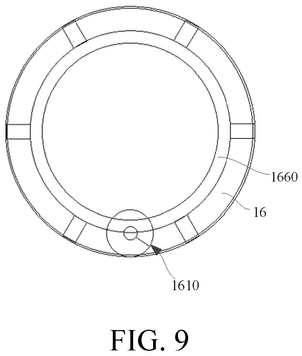

Referring to FIG. 8 and FIG. 9, in a possible implementation, the self-cleaning mechanism further includes at least two limiting members 1660. The limiting members 1660 are convexly disposed on the inner wall of the rotary cylinder 16 in the radial direction X of the rotary cylinder 16. The at least two limiting members 1660 are spaced apart in the axial direction Z of the rotary cylinder 16, to divide the rotary cylinder 16 to form a plurality of subranges, and the scraping member 1610 is movably disposed in one or more subranges.

In this embodiment, a specific structure of the self-cleaning mechanism is disposed, to optimize a cooperation manner of the scraping member 1610 and the rotary cylinder 16. Specifically, the self-cleaning mechanism is configured to be a combination member that at least includes the scraping member 1610 and two limiting members 1660. The two limiting members 1660 are scattered in the axial direction Z of the rotary cylinder 16, the limiting members 1660 are connected to the inner wall of the rotary cylinder 16, and the scraping member 1610 is movably configured between the two limiting members 1660, to keep the scraping member 1610 from creeping and moving in the axial direction Z of the rotary cylinder 16, resulting in a poor scraping effect of the scraping member 1610.

During working, the rotary cylinder 16 rotates clockwise. In this case, the scraping member 1610 rotates along with the rotary cylinder 16 under the action of the frictional force between the scraping member and the inner wall of the rotary cylinder 16. After the scraping member 1610 rotates to a certain height, the weight of the scraping member 1610 overcomes the frictional force between the scraping member 1610 and the inner wall of the rotary cylinder 16, to enable the scraping member 1610 to roll counterclockwise back to a bottom of the rotary cylinder 16. This process is repeated to use the scraping member 1610 to reciprocate in a circumferential direction of the rotary cylinder 16, to scrape and clean off the material deposit accumulated on the inner wall of the rotary cylinder 16.

In an example, the limiting member 1660 is a board structure, to simplify the structure.

In a possible implementation, in the radial direction X of the rotary cylinder 16, a cross-sectional shape of the limiting members 1660 is any one of a circular ring, a semicircular ring, an ellipse, an irregular polygon, a square, a rhomboid or a triangle.

In this embodiment, a specific shape of the limiting members 1660 is set, to optimize the structure of the self-cleaning mechanism. The limiting members 1660 may be freely selected, as long as a position of the scraping member 1610 in the axial direction Z of the rotary cylinder 16 can be limited. As an example rather than limitation, the limiting member 1660 is a circular ring structure. An outer ring of the circular ring structure is connected to the inner wall of the rotary cylinder 16, and an inner ring of the circular ring structure extends at an axial center of the rotary cylinder 16. In this way, the scraping member 1610 is limited between the two limiting members 1660, to clear off the material deposit accumulated on the inner wall of the rotary cylinder 16 between the two limiting members 1660, thereby preventing the scraping member 1610 from moving and creeping in the axial direction Z of the rotary cylinder 16 and avoiding a poor cleaning effect. It should be understood that a material is transferred through an intermediate hole of the limiting members 1660.

### Embodiment 5

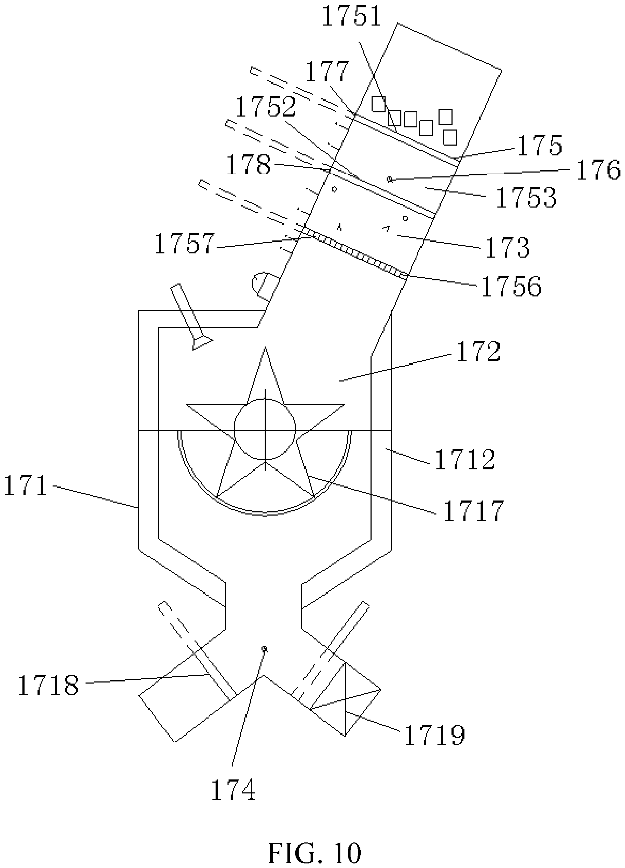

The waste battery thermal desorption treatment system provided in this application further includes a battery crushing apparatus, as shown in FIG. 10 to FIG. 13. The battery crushing apparatus is configured to crush a battery. A crushed battery material generated by the battery crushing apparatus passes through the feed port to enter the thermal desorption cavity. The battery crushing apparatus includes: a supporting body 171, where the supporting body 171 is provided with a crushing cavity 172 and a feed channel 173 that are in communication with each other, and the feed channel 173 is located above the crushing cavity 172; a first gas introduction portion 174, disposed at a bottom of the supporting body 171 and in communication with the crushing cavity 172, where a first inert gas is introduced into the crushing cavity 172 through the first gas introduction portion 174; a feed assembly 175, disposed in the feed channel 173, where the feed assembly 175 includes a first movement member 1751 and a second movement member 1752 that are spaced apart in an extension direction of the feed channel 173, a first partition cavity 1753 is provided between the first movement member 1751 and the second movement member 1752, the first movement member 1751 and the second movement member 1752 are separately movably disposed, and through movement of the first movement member 1751 and the second movement member 1752, a to-be-crushed material drops into the crushing cavity 172 or drops into the first partition cavity 1753; and a second gas introduction portion 176, disposed between the first movement member 1751 and the second movement member 1752 and is in communication with the first partition cavity 1753, and a second inert gas is introduced into the first partition cavity 1753 through the second gas introduction portion 176.

The battery crushing apparatus provided in this application provides includes the supporting body 171, the first gas introduction portion 174, the feed assembly 175, and the second gas introduction portion 176. The supporting body 171 is provided with a crushing cavity 172 and a feed channel 173 that are in communication with each other, and the feed channel 173 is located above the crushing cavity 172. The first gas introduction portion 174 is disposed at a bottom of the supporting body 171 and in communication with the crushing cavity 172. A first inert gas is introduced into the crushing cavity 172 through the first gas introduction portion 174. The feed assembly 175 is disposed in the feed channel 173. The feed assembly 175 includes a first movement member 1751 and a second movement member 1752 that are spaced apart in an extension direction of the feed channel 173. A first partition cavity 1753 is provided between the first movement member 1751 and the second movement member 1752. The first movement member 1751 and the second movement member 1752 are separately movably disposed. Through movement of the first movement member 1751 and the second movement member 1752, a to-be-crushed material drops into the crushing cavity 172 or drops into the first partition cavity 1753. The second gas introduction portion 176 is disposed between the first movement member 1751 and the second movement member 1752 and is in communication with the first partition cavity 1753. A second inert gas is introduced into the first partition cavity 1753 through the second gas introduction portion 176. Through such an arrangement, the inert gas can be introduced into the crushing cavity 172 by using the first gas introduction portion 174, to avoid problems such as an explosion during crushing of the lithium battery. In addition, the inert gas is introduced into the first partition cavity 1753, so that when a lithium battery with electricity drops into the first partition cavity 1753, the inert gas in the first partition cavity 1753 carries out oxygen in the lithium battery, thereby improving the safety of the battery crushing apparatus.

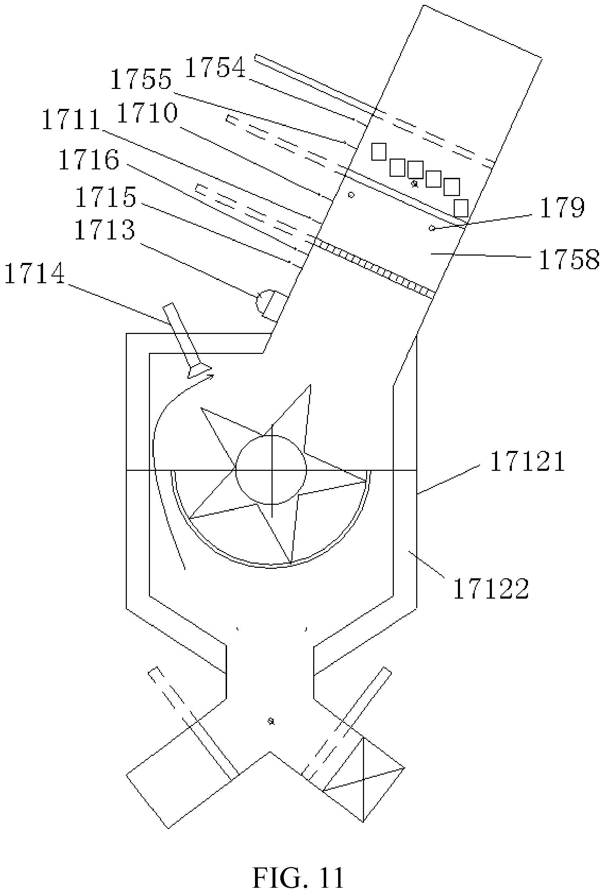

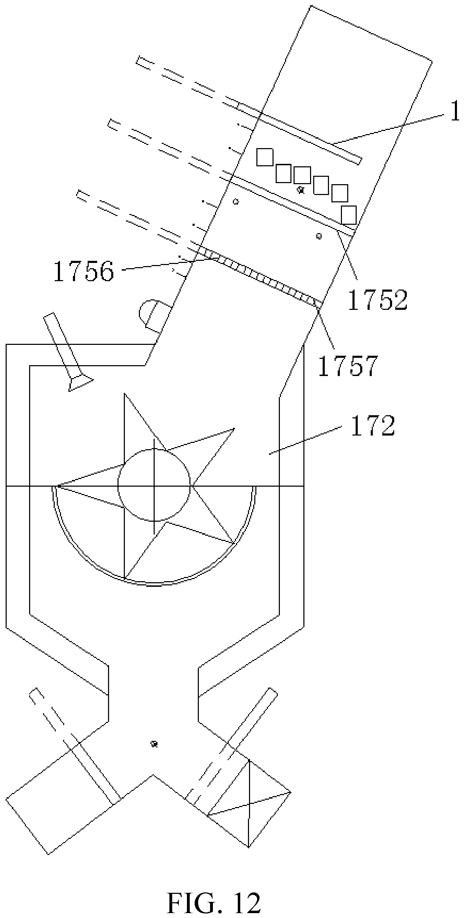

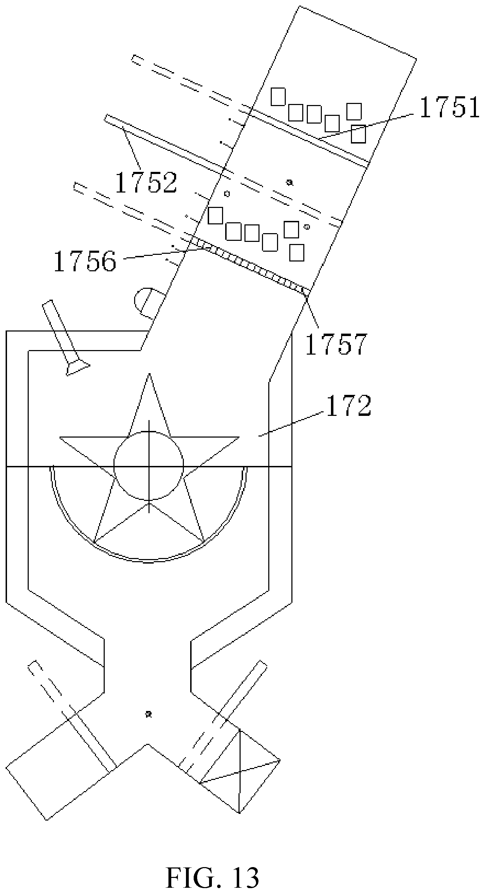

As shown in FIG. 10, the inert gas is continuously introduced into the first partition cavity 1753 between the first movement member 1751 and the second movement member 1752. When both the first movement member 1751 and the second movement member 1752 are closed and the gas pressure in the first partition cavity 1753 reaches a certain value, the introduction of the inert gas is stopped. During feeding, the system detects that a pressure of the inert gas in the first partition cavity 1753 is greater than a minimum limit value and the second movement member 1752 is in a closed state, the first movement member 1751 is opened. As shown in FIG. 11, in a process of turning on the first movement member 1751, because the pressure of the inert gas in the apparatus is higher than an external atmospheric pressure, the inert gas is released outside from the valves, to dilute and drive away oxygen outside the valves. After the first movement member 1751 is opened to a certain openness, the material slides into the first partition cavity 1753 under the gravitational force, and at the same time carries a small amount of oxygen. After the first movement member 1751 is turned on to a maximum openness, the first movement member 1751 starts to be closed, as shown in FIG. 12. When the first movement member 1751 blocks a fed material above the first partition cavity 1753 and has not been completely closed, determination is performed according to an oxygen content detection value. When the oxygen content detection value is greater than the oxygen content limit value, the first movement member 1751 stops action, and when the oxygen content detection value is lower than the oxygen content limit value, the first movement member 1751 starts to be closed. When the oxygen content detection value is lower than the oxygen content limit value, the first movement member 1751 is directly closed. After the first movement member 1751 is completely closed and an oxygen content is lower than the limit value, the second movement member 1752 is opened. As shown in FIG. 13, the material enters a next stage and is blocked by a third movement member 1756. The inert gas introduced from the bottom may pass through the third movement member 1756, flow along a surface of a to-be-treated battery, and may be eventually exhausted from gas collection port. In this process, residual oxygen on the surface of the battery is diluted and taken away. After it is detected that the oxygen content in this region meets a requirement in crushing, the third movement member 1756 is opened, and the material enters the crushing cavity 172. The crushing and cooling of the material are completed in the crushing cavity 172. After the material is crushed, and a discharge gas locking apparatus 1719 in which the inert gas is introduced transports the material to back-end equipment.

Further, the supporting body 171 is provided with a first through opening 177, the first through opening 177 extends in a circumferential direction of the supporting body 171, and at least part of the first movement member 1751 is inserted into the feed channel 173 through the first through opening 177 and moves in a radial direction of the feed channel 173. Further, the supporting body 171 is provided with a second through opening 178, the second through opening 178 extends in a circumferential direction of the supporting body 171, and at least part of the second movement member 1752 is inserted into the feed channel 173 through the second through opening 178 and moves in a radial direction of the feed channel 173. An inert gas with a certain pressure is filled inside the first partition cavity 1753. In this way, at the same time when the first movement member 1751 is opened, the inert gas with a large pressure in the first partition cavity 1753 can take away oxygen in the material in an exhaustion process. The first movement member 1751 and the second movement member 1752 both move in the radial direction of the feed channel 173, making it convenient to control a total drop amount of the material.

In addition, the feed assembly 175 further includes: a first pressure detection part 1754, disposed on the supporting body 171, where at least part of the first pressure detection part 1754 is located in the first partition cavity 1753; and a first oxygen content detection part 1755, disposed on the supporting body 171, where at least part of the first oxygen content detection part 1755 is located in the first partition cavity 1753. The monitoring of a pressure and an oxygen content inside the first partition cavity 1753 is implemented. The first pressure detection part 1754 detects the pressure inside the first partition cavity 1753, to keep the pressure from becoming excessively large to avoid leakage. The first oxygen content detection part 1755 detects the oxygen content inside the first partition cavity 1753, to keep the oxygen content from becoming excessively high to avoid an explosion accident.

The battery crushing apparatus further includes: the third movement member 1756, disposed on a side of the feed assembly 175 close to the crushing cavity 172, where a plurality of vent holes 1757 are provided in the third movement member 1756, and the plurality of vent holes 1757 are spaced apart. The third movement member 1756 is movably disposed in the feed channel 173. A second partition cavity 1758 is provided between the third movement member 1756 and the second movement member 1752. The battery crushing apparatus further includes: a gas exhausted port 179, disposed on the supporting body 171, and in communication with the second partition cavity 1758. The third movement member 1756 may block a material from falling into the crushing cavity 172, and can implement the passage of an inert gas through the vent hole 1757, to carry oxygen around the material away through the exhaust port above.

The battery crushing apparatus further includes: a second pressure detection part 1710, disposed on the supporting body 171, where at least part of the second pressure detection part 1710 is located in the second partition cavity 1758; and a second oxygen content detection part 1711, disposed on the supporting body 171, where at least part of the second oxygen content detection part 1711 is located in the second partition cavity 1758. The monitoring of a pressure and an oxygen content inside the second partition cavity 1758 is implemented, to avoid a safety accident. An inert gas is controlled to be introduced below the crushing cavity 172, pass through a crushing region, and is exhausted from above the crushing cavity 172. Part of oxygen that is generated in a crushing process or carried by a material is taken away from the crushing region from bottom to top, to avoid the risk of a fire or an explosion. In addition, the oxygen content in the crushing cavity 172 is detected in real time. Once the oxygen content is slightly high, it is immediately controlled to stop feeding.

Further, the battery crushing apparatus further includes: a cooling assembly 1712, disposed on the supporting body 171. The cooling assembly 1712 includes: a jacket part 17121, sleeved over the supporting body 171, and located on an outer side of the crushing cavity 172, where a cooling medium flow channel 17122 is provided between the jacket part 17121 and the supporting body 171, a cooling medium is disposed in the cooling medium flow channel 17122, and thermal exchange is performed with the supporting body 171 through the cooling medium. Through the control of cooling of the crushing region, temperature reduction of a crushed material is implemented, to ensure the safe and reliable running of the system. A cooling jacket is disposed on the crushing cavity and a housing of an outlet transport apparatus. An initial temperature of thermal exchange of a cooling medium in the jacket is controlled according to data fed back by a temperature detection apparatus, and temperatures in the crushing cavity 172 and the crushed material are controlled below an ignition point. In addition, rotational speeds of a crushing apparatus and an outlet apparatus are controlled, to make a material quickly pass through the crushing cavity 172 to be quickly discharged outside, thereby reducing a case in which materials are accumulated to cause a short circuit and heat generation.

The battery crushing apparatus further includes: a pressure relief portion 1713, disposed on the supporting body 171, and in communication with the crushing cavity 172; a firefighting part 1714, disposed on the supporting body 171, and opposite to the crushing cavity 172, where preferably at least part of the firefighting part 1714 extends into to the crushing cavity 172; a temperature detection part 1715, disposed on the supporting body 171, where at least part of the temperature detection part 1715 extends into the crushing cavity 172; a flame detection part 1716, disposed on the supporting body 171, where at least part of the flame detection part 1716 is located in the crushing cavity 172, and emergency actions of the apparatuses after a fire is started or a pressure relief apparatus is turned on are controlled, to implement quick firefighting for the material in the crushing cavity; a crushing cutter 1717, disposed inside the crushing cavity, and configured to crush the material; and an emergency shut-off valve 1718 and an discharge gas locking apparatus 1719, where when the pressure in the crushing cavity 172 rises abruptly, the release valve is opened, or the flame detection part 1716 feeds back a fire signal. After receiving a feedback, the system controls the discharge gas locking apparatus to be closed simultaneously. In addition, a low-temperature inert gas is immediately introduced into the crushing cavity 172, to achieving the objective of putting out the fire and stopping adding combustibles. The discharge by-pass valve is opened, to urgently discharge the burning material to a safe region.

When a feed gas locking apparatus opens the first movement member 1751, the introduction of the inert gas may be stopped. The inert gas is introduced when a position of the first oxygen content detection part 1755 is reached. After it is detected that the oxygen content is lower than the limit value, the first movement member 1751 acts to be completely closed.

Equipment connected at an outlet back end of crushing may be protected with an inert gas. The discharge gas locking apparatus 1719 may be replaced with an emergency gas locking valve, which is only closed when an emergency occurs, and is in a normally on state within the remaining time.

The crushing cutter 1717 may be a single-shaft shredder, a double-shaft shredder, a four-shaft shredder, a crusher, or the like. A form of the crushing apparatus is not limited, but it is necessary to ensure the airtightness of the equipment during crushing.

A quick discharge apparatus at a lower portion of the crushing cavity 172 may be a spiral or a three-way auger.

The feed gas locking apparatus includes the first movement member 1751 and the second movement member 1752. The first movement member 1751 and the second movement member 1752 may be gas locking apparatuses such as double gate valves, double flap valves, double butterfly valves, or the like.

As can be seen from the foregoing description, the foregoing embodiment in this application achieves the following technical effects: Through the application of the technical solution in this application, full-process sealed crushing is performed, introduction of an inert gas is controlled, and a flow direction of the inert gas is controlled through actions of valve boards, to drive away oxygen, thereby ensuring the control of an oxygen content in a crushing process. An openable movable baffle is disposed between the feed gas locking apparatus and the crushing cavity, so that while a material can be blocked from falling into the crushing cavity, it can be implemented that the inert gas passes through from under the lower portion, to carry away oxygen around the material through the exhaust port above. The speed of crushing and the speed of output and transport by the equipment are controlled, to reduce a case that materials are accumulated in a crushing process and after crushing and as a result the temperature of the materials rises. The cooling of the crushing region is controlled, to implement the temperature reduction of the crushed materials. The safe and reliable running of the system is ensured. Emergency actions of the apparatuses after a fire is started or a pressure relief apparatus is turned on are controlled, to implement quick firefighting for the material in the crushing cavity.

### Embodiment 6

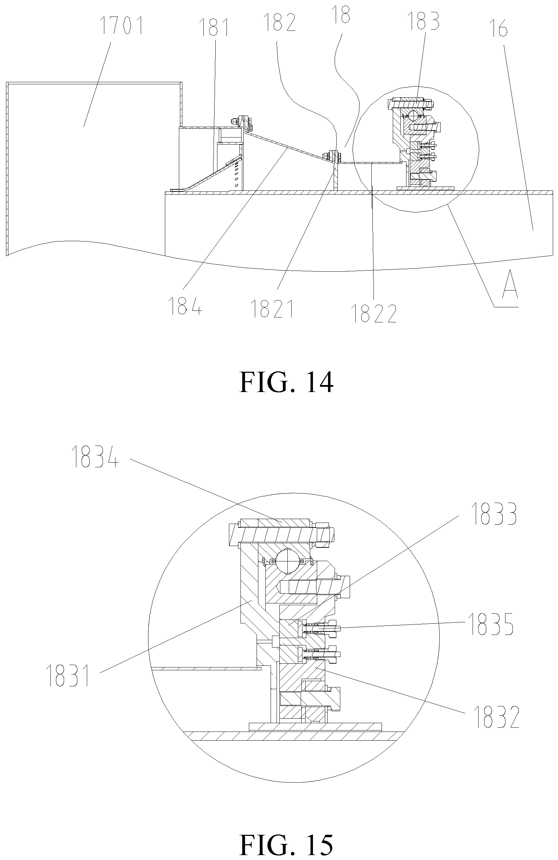

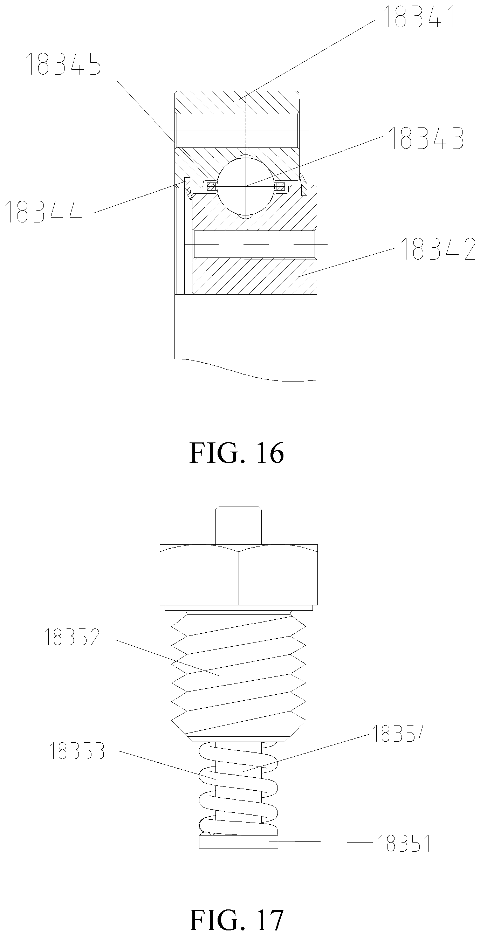

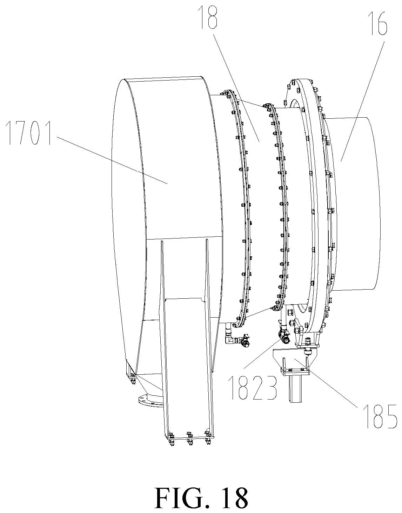

Referring to FIG. 14 to FIG. 18, the rotary kiln 10 of the waste battery thermal desorption treatment system provided in this embodiment includes a kiln head cover 1701, a kiln tail cover 1702, a rotary cylinder 16, and a sealing structure 18. A connecting end of the kiln head cover 1701 and a connecting end of the kiln tail cover 1702 are respectively sleeved over two ends of the rotary cylinder 16. Specifically, a connecting end of the kiln head cover 1701 and a connecting end of the kiln tail cover 1702 are respectively sleeved over connecting ends at two ends of the rotary cylinder 16. A to-be-sealed gap exists between a radial direction of the kiln head cover 1701 and/or a radial direction of the kiln tail cover 1702 and a radial direction of the rotary cylinder 16. The rotary cylinder 16 is rotatably disposed relative to the kiln head cover 1701 and the kiln tail cover 1702. The sealing structure 18 is configured to block and seal the to-be-sealed gap. The rotary cylinder 16 is rotatably disposed relative to the kiln head cover 1701 and the kiln tail cover 1702, and the sealing structure 18 is configured to block and seal the to-be-sealed gap. The sealing structure 18 includes a first sealing portion 181, a second sealing portion 182, and a third sealing portion 183. The first sealing portion 181 is a flexible structure, and the flexible structure is mounted in the to-be-sealed gap. The second sealing portion 182 is connected to the connecting end of the kiln head cover 1701 or the connecting end of the kiln tail cover 1702. The second sealing portion 182 is configured to defining a sealing cavity with the rotary cylinder 16. A protection gas is filled in the sealing cavity. Alternatively, the third sealing portion 183 is mounted at the connecting end of the kiln head cover 1701 or the connecting end of the kiln tail cover 1702. The third sealing portion 183 includes a first connecting portion 1831, a second connecting portion 1832, and a sealing member 1833. The first connecting portion 1831 is fixedly connected to the connecting end of the kiln head cover 1701 or the connecting end of the kiln tail cover 1702. A sealing end of the first connecting portion 1831 and a sealing end of the second connecting portion 1832 are arranged in an axial direction of the kiln head cover 1701 or the kiln tail cover 1702. The sealing member 1833 is configured to seal a gap between the sealing end of the first connecting portion 1831 and the sealing end of the second connecting portion 1832.

With such an arrangement, the first sealing portion 181 with a flexible structure, the second sealing portion 182 that is provided with a protection gas, and the third sealing portion 183 that is provided with a plurality of sealing portions are disposed at the sealing structure 18. During rotation and operation of the rotary kiln 10, sealing gaps can be blocked and dangerous gases can be insulated for the rotary kiln 10 in different manners, so that the degree of fitting between the assemblies of the rotary kiln 10 can be improved, and the technical problem of poor airtightness of the rotary kiln 10 in the prior art can be resolved.

Specifically, the sealing structure 18 may be disposed between the rotary cylinder 16 and the kiln head cover; or the sealing structure 18 may be disposed between the rotary cylinder 16 and the kiln tail cover; or the sealing structure 18 may be disposed between the rotary cylinder 16 and the kiln head cover, and at the same time the sealing structure 18 may be disposed between the rotary cylinder 16 and the kiln tail cover.

Specifically, the first sealing portion 181 is an annular structure, an outer ring of the first sealing portion 181 is fixedly connected to the kiln head cover 1701 or the kiln tail cover 1702, and an inner ring of the first sealing portion 181 is joined to an outer wall of the rotary cylinder 16. With such an arrangement, when the kiln head cover 1701 or the kiln tail cover 1702 moves relative to the rotary cylinder 16, the first sealing portion 181 can be kept tightly joined to the rotary cylinder 16, so that the airtightness can be effectively enhanced.

In this embodiment, the sealing structure 18 includes the first sealing portion 181, the second sealing portion 182, and the third sealing portion 183, and the second sealing portion 182 is disposed between the first sealing portion 181 and the third sealing portion 183. The sealing structure 18 further includes a flexible connecting member 184. The flexible connecting member 184 is disposed between the first sealing portion 181 and the second sealing portion 182. The flexible connecting member 184 is an annular housing structure. At least part of the flexible connecting member 184 is retractably disposed in an axial direction of the rotary cylinder 16. With such a structural arrangement, the flexible connecting member 184 can extend and retract in an axial direction under the temperature impact and movement impact of the rotary cylinder 16, to better ensure the stability and reliability of connection.

Specifically, the sealing cavity is an annular cavity body, and the annular cavity body is disposed surrounding the outer wall of the rotary cylinder 16. With such an arrangement, a protection cavity may be formed outside the rotary cylinder 16, so that a protection range of the sealing structure 18 can be extended, and the arrangement of the annular cavity body can also facilitate the mounting of another sealing part, so that another sealing part and the rotary cylinder 16 can tightly cooperate to improve the airtightness of the rotary kiln 10. Specifically, the sealing cavity may be configured to fill a high-pressure inert gas.

In this embodiment, the second sealing portion 182 includes a first annular board 1821 and a second annular board 1822. The first annular board 1821 extends in a radial direction of the rotary cylinder 16. An outer ring of the first annular board 1821 is fixedly connected to the kiln head cover 1701 or the kiln tail cover 1702. An inner ring of the first annular board 1821 is joined to the outer wall of the rotary cylinder 16. The second annular board 1822 extends in the axial direction of the rotary cylinder 16. The third sealing portion 183 is disposed at an end of the second annular board 1822 away from the first annular board 1821. The third sealing portion 183 is configured to block and seal the end of the second annular board 1822 away from the first annular board 1821. In this way, the first annular board 1821, the second annular board 1822, the third sealing portion 183, and the outer wall of the rotary cylinder 16 define a sealing cavity. With such a structural arrangement, the structure is simple, and it can be convenient to effectively form the sealing cavity.

The space in the second annular board 1822 may be filled with an inert gas. In this way, when the rotary kiln 10 operates, a certain positive pressure is formed in the sealing cavity defined by the first annular board 1821, the second annular board 1822, and the third sealing portion 183. That is, a pressure in the sealing cavity is higher than that outside the sealing cavity, to keep a gas outside of the sealing cavity from entering, thereby further enhancing the airtightness of the rotary kiln 10.

In this embodiment, the third sealing portion 183 further includes a rotary bearing 1834. A rotary bearing outer ring 18341 of the rotary bearing 1834 is connected to the first connecting portion 1831, and a rotary bearing inner ring 18342 of the rotary bearing 1834 is connected to the second connecting portion 1832. With such an arrangement, the rotary bearing 1834 is disposed in a connection gap between the first connecting portion 1831 and the second connecting portion 1832, and may further block sealing gaps at the first connecting portion 1831 and the second connecting portion 1832, to reduce a possibility of gas leakage. In addition, the rotary bearing 1834 uses a cylindrical arrangement, and therefore does not affect mutual movement of the first connecting portion 1831 and the second connecting portion 1832, and in addition the rotary bearing 1834 can further provide a certain support for the movement of the two.

Specifically, a mounting groove is provided in a side of the second connecting portion 1832 close to the first connecting portion 1831, and the sealing member 1833 is mounted in the mounting groove. The arrangement of the sealing member 1833 may further block the sealing gaps, to further reduce gas leakage.

In this embodiment, the second connecting portion 1832 is an annular disk structure, a communication hole in communication with the mounting groove is further provided in the second connecting portion 1832, and the communication hole extends in an axial direction of the second connecting portion 1832. The third sealing portion 183 further includes a compression assembly 1835, and a compression portion 18351 of the compression assembly 1835 passes through the communication hole to abut against the sealing member 1833, to make the sealing member 1833 abut against the first connecting portion 1831 under the action of a compression force of the compression portion 18351. The arrangement of the compression assembly 1835 can further compress a gap between the second connecting portion 1832 and the sealing member 1833, so that gas leakage between the two can be further reduced, thereby further enhancing the airtightness of the rotary kiln 10.

Specifically, the compression portion 18351 is a compression block, and the compression assembly 1835 further includes a compression rod 18352 and an elastic member 18353.

An external thread is provided on the compression rod 18352, and an internal thread matching the external thread is disposed in the communication hole. In this way, the connection between the compression assembly 1835 and the communication hole can be facilitated, and the arrangement of the threads can further reduce the sealing gaps, to prevent gas leakage.

One end of the elastic member 18353 abuts against the compression rod 18352, and the other end of the elastic member 18353 is connected to the compression block. The arrangement of the elastic member 18353 can provide the compression block with a force toward the first connecting portion 1831, so that the sealing member 1833 can better abut against the first connecting portion 1831, thereby further improving the airtightness of the sealing structure 18.

In this embodiment, an avoidance hole is provided in the compression rod 18352, the avoidance hole extends in an axial direction of the compression rod 18352, and the avoidance hole is disposed penetrating two ends of the compression rod 18352. The compression assembly 1835 further includes a guide rod 18354, the guide rod 18354 passes through the avoidance hole to be connected to the compression block, and the elastic member 18353 is sleeved over the guide rod 18354. The guide rod 18354 is disposed at the center of the compression assembly 1835, and the guide rod 18354 can implement a certain guide action, so that the compression assembly 1835 can be prevented from deviating from a preset position during assembly, thereby avoiding affecting the sealing effect of the sealing structure 18. In addition, the arrangement of the guide rod 18354 can also make it convenient to mount the assemblies such as the elastic member 18353.

In the sealing structure 18 provided in this embodiment, sealing is mainly performed at a kiln head end portion and a kiln tail end portion of the rotary kiln 10. The sealing structure 18 is connected to the kiln head cover 1701 and the rotary cylinder 16 or is connected to the kiln tail cover 1702 and the rotary cylinder 16. The sealing structure 18 mainly includes a cavity body structure formed by flexible sealing (corresponding to the first sealing portion 181), inert gas sealing (corresponding to the second sealing portion 182), and rotary bearing end surface sealing (corresponding to the rotary bearing 1834). The kiln head cover 1701 and the kiln tail cover 1702 may be kiln body covers of the rotary kiln 10, the first sealing portion 181 may be flexible sealing, the second sealing portion 182 may be inert gas sealing, and the rotary bearing 1834 may be rotary bearing end surface sealing.

Specifically, kiln head end portion sealing and kiln tail end portion sealing of the rotary kiln 10 may be one or a combination of flexible sealing, inert gas sealing or rotary bearing end surface sealing according to an airtightness requirement. The flexible sealing, the inert gas sealing, and the rotary bearing end surface sealing can all implement a certain sealing action.

In this embodiment, the kiln body covers of the rotary kiln 10 include the kiln head cover 1701 and the kiln tail cover 1702. The rotary kiln 10 is usually a heating furnace. The flexible connecting member 184 may be configured for the rotary kiln 10 as required, a part of soft connection of the flexible connecting member 184 may be extended under heat, and the soft connection mainly performs axial retractable compensation. The soft connection may be a metal bellows expansion joint or a silicone cloth composite soft connection. The flexible structure may include a stainless steel board (scale sealing), an ultrathin windbreak board, a silicon-nickel-carbon composite board, an external guard board, and the like. An inert gas short joint fills an inert gas into the sealing cavity through a gas inlet port 1823, to form a certain positive pressure in a cavity body defined by the flexible sealing, the soft connection, the inert gas short joint, and the rotary bearing end surface sealing, so that a gas and environmental gas in a rotating cylinder can be prevented from entering the cavity body. When a negative pressure is formed in a rotary cylinder body, the flexible sealing forms a first seal, the inert gas sealing forms a second seal, and the rotary bearing end surface sealing forms a third seal. An inert gas introduction hole is provided in the sealing member 1833. The sealing member 1833 may be an end surface sealing packing. During the introduction of an inert gas, a strong positive pressure is formed to isolate a gas to implement sealing. The negative pressure that this sealing apparatus can withstand may reach 3 kPa, and can meet sealing application requirements of the rotary kiln 10 in the industry.

Specifically, the rotary bearing end surface sealing mainly includes the first connecting portion 1831, the second connecting portion 1832, the rotary bearing 1834, a filler material, the compression assembly 1835, and the like. The first connecting portion 1831 may be a static ring pressure plate, and the second connecting portion 1832 may be a dynamic ring pressure plate. The static ring pressure plate is connected to the inert gas short joint, the dynamic ring pressure plate is fastened to the rotary cylinder body, the static ring pressure plate is fastened to the rotary bearing outer ring 18341 of the rotary bearing 1834 at the same time, and the dynamic ring pressure plate is fastened to an inner ring of the rotary cylinder body. The rotary bearing outer ring 18341 of the rotary bearing 1834 is fastened by a limiting portion 185. When rotary cylinder body rotates, the dynamic ring pressure plate and the rotary bearing inner ring 18342 of the rotary bearing 1834 make circular rotation, and the flexible sealing, the soft connection, and the inert gas sealing are all relatively stationary. The dynamic ring pressure plate and the static ring pressure plate are sealed by the rotary bearing 1834. In a rotation process, a nut at an outermost end of the compression assembly 1835 compresses the elastic member 18353 (the elastic member 18353 may be a spring), the elastic member 18353 compresses the guide rod 18354, the guide rod 18354 then compresses the rotary bearing 1834 on the static ring pressure plate through the compression portion 18351 (which may be a pressure plate), the rotary bearing 1834 and the static ring pressure plate make a relative rotational and frictional movement, and end surface sealing with the static ring pressure plate is implemented through a fitting plane of the rotary bearing 1834. According to a sealing requirement, multiple end surface seals may be disposed on the sealing structure 18. In this embodiment, two seals are disposed. The rotary bearing 1834 is mainly formed by the rotary bearing outer ring 18341, the rotary bearing inner ring 18342, a rolling body 18343, a sealing ring 18344, and a holder 18345.

As can be seen from the foregoing description, the foregoing embodiment in this application implements the following technical effect: The first sealing portion 181, the second sealing portion 182, and the third sealing portion 183 of different sealing principles are disposed in the sealing structure 18 of the rotary kiln 10, and different sealing effects may be implemented between the kiln head cover 1701 and the rotary cylinder 16 and between the kiln tail cover 1702 and the rotary cylinder 16, so that effective sealing can be formed at different positions in an operating process of the rotary kiln, and the technical problem of poor airtightness of the rotary kiln in the prior art can be resolved.

### Embodiment 7

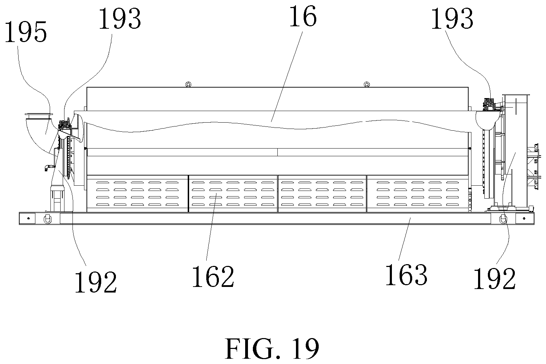

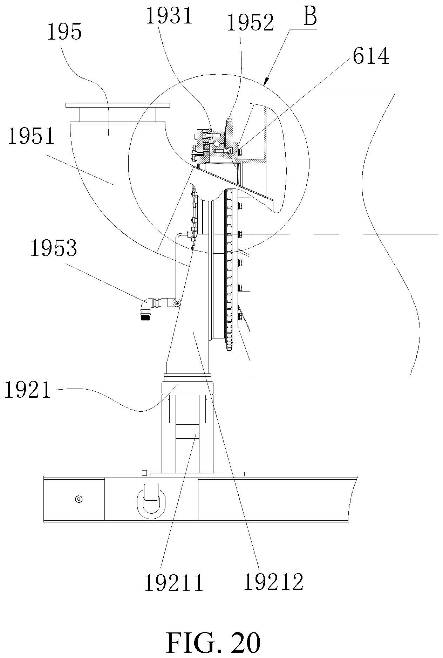

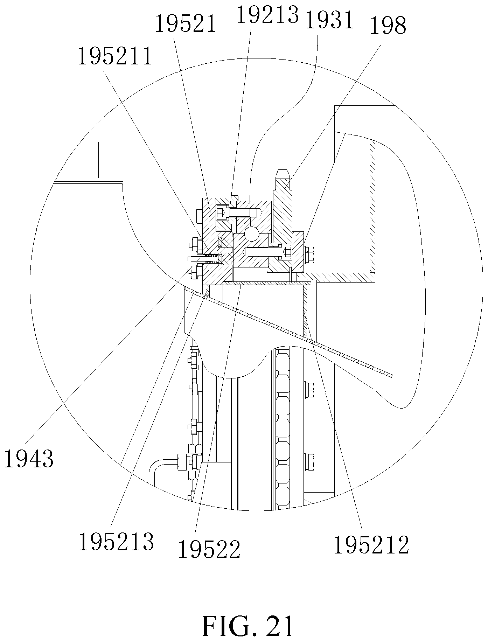

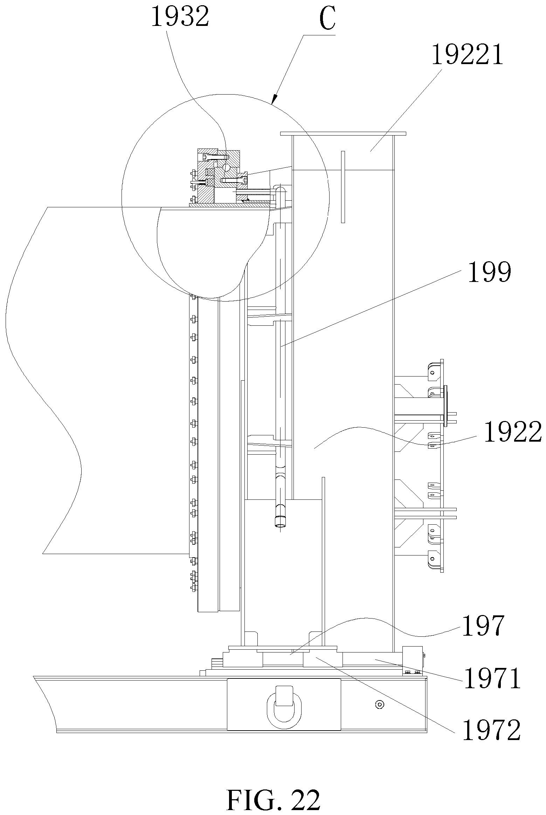

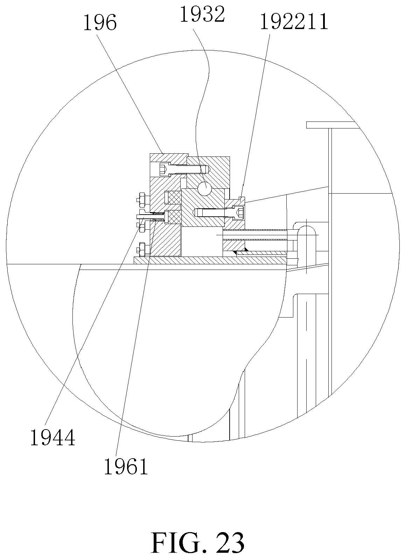

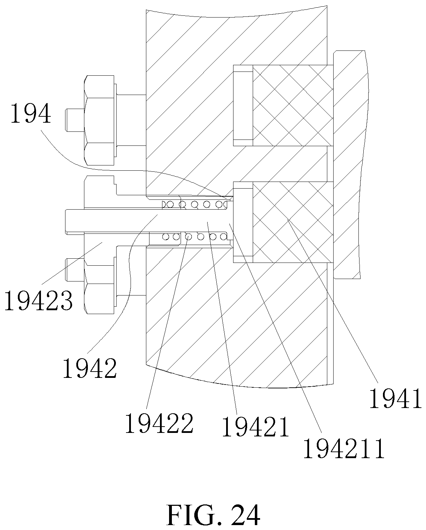

As shown in FIG. 19 to FIG. 24, the rotary kiln 10 in this embodiment of this application includes: a rotary cylinder 16, an end portion supporting structure 192, a rotary bearing structure 193, and a sealing assembly 194. The rotary cylinder 16 is rotatably disposed. The end portion supporting structure 192 is disposed at an end portion of the rotary cylinder 16. The end portion supporting structure 192 is fixedly disposed. One of an inner ring of the rotary bearing structure 193 and an outer ring of the rotary bearing structure 193 is connected to the rotary cylinder 16. The other one of the inner ring of the rotary bearing structure 193 and the inner ring of the rotary bearing structure 193 is connected to the end portion supporting structure 192. The sealing assembly 194 is mounted on the end portion supporting structure 192. The sealing assembly 194 includes a sealing part 1941 and an abutting part 1942. The sealing part 1941 is disposed on the rotary bearing structure 193. The abutting part 1942 abuts against one end of the sealing part 1941, to make the other end of the sealing part 1941 joined to at least part of the rotary bearing structure 193 under an abutting action of the abutting part 1942.

Through the use of the rotary kiln provided in this embodiment, the abutting part 1942 can enable the sealing part 1941 to be stably joined and sealed to at least part of the rotary bearing structure 193, and the abutting part 1942 changes adaptively according to changes of the rotary cylinder 16, so that the abutting part 1942 can enable the sealing part 1941 to stably abut against the rotary bearing structure 193, and loosening of sealing due to the rotation of the rotary cylinder 16 is avoided. Therefore, through the use of the rotary kiln provided in this embodiment, the technical problem of a poor sealing effect of the rotary kiln in the prior art can be resolved.

In this embodiment, the abutting part 1942 includes an abutting rod 19421, an elastic member 19422, and an abutting sleeve 19423. An end portion of the abutting rod 19421 abuts against an end of the sealing part 1941, and a limiting step 194211 is disposed on the abutting rod 19421. The elastic member 19422 is sleeved over the abutting rod 19421. One end of the elastic member 19422 abuts against the limiting step 194211. The abutting sleeve 19423 is sleeved over an end of the abutting rod 19421 away from the sealing part 1941. The abutting sleeve 19423 is disposed protruding from a sidewall of the abutting rod 19421. The other end of the elastic member 19422 abuts against the abutting sleeve 19423. With such an arrangement, under the action of an elastic force of the abutting part 1942, the sealing part 1941 can be compressed in the direction of the rotary bearing structure 193, so that the sealing effect of the sealing part 1941 can be enhanced, and the arrangement of the abutting sleeve 19423 can also reduce a leakage amount to a certain degree, thereby improved the sealing effect of the sealing assembly 194.

Specifically, the other end of the sealing part 1941 is configured to be joined to the inner ring of the rotary bearing structure 193. In this way, it can be convenient to perform sealing in the interior of the rotary bearing structure 193 through the sealing part 1941, thereby improving the airtightness of the assemblies of the rotary kiln.

In this embodiment, the rotary bearing structure 193 includes a first rotary bearing 1931, the end portion supporting structure 192 includes a kiln head supporting structure 1921, and the kiln head supporting structure 1921 includes: a first supporting foundation 19211 and a first supporting board group 19212. The first supporting board group 19212 is disposed on the first supporting foundation 19211. The first supporting board group 19212 is connected to an outer ring of the first rotary bearing 1931. The rotary cylinder 16 is connected to an inner ring of the first rotary bearing 1931. With such an arrangement, a supporting and mounting space can be provided for the assemblies of the rotary kiln, and the arrangement of the kiln head supporting structure 1921 can improve the running stability of the assemblies of the rotary kiln to a certain degree.

Specifically, the rotary kiln further includes a feed pipe group 195, the feed pipe group 195 includes a feed pipe 1951 and a sealing board group 1952, and the feed pipe 1951 is in communication with the rotary cylinder 16. The sealing board group 1952 is connected to the first supporting board group 19212, and at least part of the sealing board group 1952 and the rotary cylinder 16 define a sealing cavity body. The arrangement of the feed pipe group 195 can facilitate feeding, and the arrangement of the sealing board group 1952 can form a sealed structure at the feed, so that internal gas can be initially insulated, thereby improving a sealing effect.

In this embodiment, the sealing assembly 194 includes a first sealing assembly 1943, and the sealing board group 1952 includes: a first annular board 19521, where the first annular board 19521 is connected to the first supporting board group 19212, a first mounting through hole 195211 is provided in the first annular board 19521, the first annular board 19521 is disposed relative to the first rotary bearing 1931, and the first sealing assembly 1943 is mounted in the first mounting through hole 195211. With such an arrangement, leakage at the kiln head can be reduced through the cooperation between the first sealing assembly 1943 and the first annular board 19521, so that the airtightness of the rotary kiln can be improved.

It should be noted that, there are two sealing assemblies 194 in this embodiment. One of the sealing assemblies 194 is mounted at the kiln head to form the first sealing assembly 1943, and the other sealing assembly 194 is mounted at the kiln tail to form a second sealing assembly 1944.

Specifically, the sealing board group 1952 further includes a connecting sleeve pipe 19522, a first connecting end board 195212, and a second connecting end board 195213, sleeved over the feed pipe 1951. One end of the connecting sleeve pipe is connected to the rotary cylinder 16, and the other end of the connecting sleeve pipe is connected to the first annular board 19521. The first connecting end board 195212 is disposed between the first annular board 19521 and the feed pipe 1951. The second connecting end board 195213 is disposed between the connecting sleeve pipe 19522 and the feed pipe 1951, to enable the connecting sleeve pipe 19522, the first annular board 19521, the first connecting end board 195212, and the second connecting end board 195213 to define the sealing cavity body. The arrangement of the sealing cavity body can improve the sealing performance of the sealing board group 1952, so that a space inside the sealing board group 1952 can be insulated from the outside as much as possible, to further improve the sealing performance, thereby better preventing a combustion-supporting gas such as oxygen from entering the sealing board group 1952. In this way, dangers such as fire hazards are avoided.

In this embodiment, the feed pipe group 195 further includes a first gas inlet pipe line 1953. The first gas inlet pipe line 1953 is in communication with the sealing cavity body. The first gas inlet pipe line 1953 is configured to introduce a sealing protection gas. The protection gas may be nitrogen. The introduction of the protection gas can insulate a material inside the rotary kiln from oxygen as much as possible, so that an explosion can be avoided, thereby further enhancing the safety of the rotary kiln during running. In addition, the introduced protection gas may also form a protection gas layer at a feed position, so that a case that an external gas enters from this position can be reduced as much as possible, and the airtightness of the rotary kiln can be further improved.

Specifically, the rotary bearing structure 193 includes a second rotary bearing 1932, the rotary cylinder 16 is connected to an outer ring of the second rotary bearing 1932, the sealing assembly 194 includes a second sealing assembly 1944, the end portion supporting structure 192 includes a kiln tail supporting structure 1922, and the kiln tail supporting structure 1922 includes: a supporting cover 19221, connected to an inner ring of the second rotary bearing 1932, where the supporting cover 19221 and the second sealing assembly 1944 are respectively disposed at two ends of the second rotary bearing 1932. With such an arrangement, support can be provided at the kiln tail of the rotary kiln, and compared with a conventional mechanical connection structure, a cover structure of the supporting cover 19221 can also reduce cooperation gaps between parts as much as possible. Under the action of the second sealing assembly 1944, the airtightness at two ends of the second rotary bearing 1932 can be improved together, thereby improving the airtightness of the rotary kiln.

In this embodiment, the rotary kiln further includes a second annular board 196, the second annular board 196 is connected to the rotary cylinder 16, the second annular board 196 is disposed at an end of the second rotary bearing 1932 away from the supporting cover 19221, a second mounting through hole 1961 is provided in the second annular board 196, and the second sealing assembly 1944 is mounted in the second mounting through hole 1961. With such an arrangement, the arrangement of the second annular board 196 can also provide a certain support action for an outer ring of the second rotary bearing 1932, and in addition, the second annular board 196 can also form further sealing for a tail portion of the rotary cylinder 16. Under the action of the gap filling of the second sealing assembly 1944, gas leakage caused by cooperation gaps in the structure can be further reduced.

Specifically, the rotary kiln further includes a guide assembly 197. The guide assembly 197 includes a guide track 1971 and a guide block 1972 that extend in a preset direction, the guide block 1972 is movably disposed on the guide track 1971, one of the guide block 1972 and the guide track 1971 is connected to the supporting cover 19221, and the other one of the guide block 1972 and the guide track 1971 is connected to the inner ring of the second rotary bearing 1932. Through the arrangement of the guide assembly 197, it can be convenient to separate the inner ring of the second rotary bearing 1932, so that it can be more convenient to repair the parts of the second rotary bearing 1932, and it is also convenient to subsequently replace the second sealing assembly 1944.

In this embodiment, the rotary kiln includes the kiln head supporting structure 1921, the rotary cylinder 16, the kiln tail supporting structure 1922, a heating cavity 162, and a bottom skid 163. The kiln head supporting structure 1921 includes the feed pipe group 195, the kiln head supporting structure 1921, the first supporting foundation 19211, the first rotary bearing 1931, a chain wheel 198, a sealing filler material (corresponding to the sealing part 1941), the sealing assembly 194, and the first gas inlet pipe line 1953. The feed pipe group 195 includes the feed pipe 1951. The feed pipe 1951 and a sealing stationary ring (corresponding to the first annular board 19521) are welded together through the connecting sleeve pipe 19522, the second connecting end board 195213, and the first connecting end board 195212 into a whole. The kiln head supporting structure 1921 is formed by welding a supporting ring 19213, the first supporting board group 19212, and the first supporting foundation 19211. The feed pipe group 195 and the kiln head supporting structure 1921 are fastened by a screw. The kiln head supporting structure 1921 is connected to the outer ring of the first rotary bearing 1931 by a screw. The kiln head supporting structure 1921 is fastened on the bottom skid 163 by the first supporting foundation 19211. After being mounted, this part of structure is a fastened part, and is used as a supporting part of the kiln head. The inner ring of the first rotary bearing 1931 and the chain wheel 198 are fastened by a screw. The chain wheel 198 and a front end flange 164 of the rotary cylinder 16 are fastened by a bolt, so that the rotary cylinder 16 is connected to the chain wheel 198 and the inner ring of the first rotary bearing 1931 into a whole. The chain wheel 198 is driven by an external chain to rotate, to drive the inner ring of the first rotary bearing 1931 and the rotary cylinder 16 to rotate, so that the rotation function of the rotary cylinder 16 is implemented. The high bearing force of the rotary bearing and the function rotation function of the inner and outer rings are fully used, to implement support for a front end of the rotary cylinder 16 and the rotation function of the rotary cylinder 16.

To implement that the cylinder body of the rotary kiln keeps sealing performance from outside in a rotation process, a sealing structure is further integrated. A specific implementation is as follows: The sealing filler material is mounted as a sealing element in a sealing groove of the sealing stationary ring. An outer side surface of the sealing filler material is directly in contact with a non-mounting side surface of the inner ring of the first rotary bearing 1931. The sealing filler material is stationary, and the inner ring of the first rotary bearing 1931 rotates. The two form a sealing frictional pair through a surface-to-surface contact, so that the sealing performance between the rotary cylinder 16 and the kiln head supporting structure 1921 is implemented. The sealing assembly 194 is mounted right opposite to the first mounting through hole 195211 on the sealing stationary ring, to make the sealing filler material compressed and joined to a contact surface of the inner ring of the first rotary bearing 1931, to implement compensation after the sealing filler material wears. The high precision of the rotary bearing and the low surface roughness after the surface is processed are fully used, and a side surface of the rotary bearing is directly used as a contact surface, so that the structure is simplified, the coaxiality and the contact precision of the frictional pair is ensured, and good sealing performance is ensured. To ensure reliable sealing, the first gas inlet pipe line 1953 is further mounted on the sealing stationary ring, nitrogen is introduced through the first gas inlet pipe line 1953 into a hollow cavity formed by the inner ring of the first rotary bearing 1931 and the connecting sleeve pipe 19522 of the feed end and the sealing stationary ring, to form a nitrogen layer, so that a medium gas in the rotary cylinder 16 is prevented from contacting a sealing surface, so that blocking and dilution can be implemented in advance.

The kiln tail supporting structure 1922 includes the supporting cover 19221, the second rotary bearing 1932, the guide assembly 197, the sealing assembly 194, and the sealing filler material, and the supporting cover 19221 includes a kiln tail cover body, a rotary bearing fixedly flange 192211, and a second gas inlet pipe line 199. The kiln tail cover body, the rotary bearing fixedly flange 192211, and the second gas inlet pipe line 199 are welded together to form a whole for use as a main supporting part of the kiln tail supporting structure. The rotary bearing fixedly flange 192211 on the supporting cover 19221 is fastened to the inner ring of the second rotary bearing 1932. The outer ring of the second rotary bearing 1932 and the sealing movable ring (corresponding to the second annular board 196) on the rotary cylinder 16 are fastened by a bolt. The sealing movable ring is welded to the rotary cylinder 16. The sealing movable ring and the rotary cylinder 16 form a whole. In this case, when rotating, the rotary cylinder 16 drives the sealing movable ring and the outer ring of the second rotary bearing 1932 to rotate. After being connected to the inner ring of the second rotary bearing 1932, the supporting cover 19221 does not rotate, so that the support of the supporting cover 19221 for the rotary cylinder 16 is implemented through the rotary bearings, and in addition the rotation and running of the rotary cylinder 16 are not affected. The sealing filler material is mounted in a concave groove of the sealing movable ring, and an outer side end surface is directly in contact with a non-mounting surface of the inner ring of the second rotary bearing 1932, to form a sealing frictional pair, thereby implementing sealing performance. The sealing assembly 194 is also mounted on the sealing movable ring, to compress the sealing filler material, and a frictional surface of the sealing filler material and a frictional surface of the inner ring of the second rotary bearing 1932 are adjustably compressed, to implement compensation after the sealing filler material wears. The high precision of the rotary bearing and the low surface roughness after the surface is processed are fully used, and a side surface of the rotary bearing is directly used as a contact surface, so that the structure is simplified, the coaxiality and the contact precision of the frictional pair is ensured, and good sealing performance is ensured.

To ensure reliable sealing, the second gas inlet pipe line 199 is welded on the supporting cover 19221, and nitrogen is introduced through the second gas inlet pipe line 199 into a hollow cavity between the rotary cylinder 16 and an inner side of the inner ring of the second rotary bearing 1932 and the rotary bearing fixedly flange 192211 on the supporting cover 19221, to form a nitrogen layer, so that a medium gas in the rotary cylinder 16 and the supporting cover 19221 is prevented from contacting a sealing surface, so that blocking and dilution can be implemented in advance.

In this embodiment, a foundation of the supporting cover 19221 is connected to the guide assembly 197, and a bottom surface of the guide assembly 197 is fastened to the bottom skid 163. In one aspect, the guide assembly 197 implements bearing, to bear the rotary cylinder 16 supported on the supporting cover 19221 and the supporting cover 19221. In another aspect, when the rotary cylinder 16 is heated and extends in an axial direction to drive the supporting cover 19221 to move, so that the function of a guide rail slide can be implemented. In still another aspect, when the sealing filler material needs to be replaced, the supporting cover 19221 and the second rotary bearing 1932 move rightward as a whole, to detach from the sealing movable ring on the rotary cylinder 16, so that a space can be reserved for replacing the sealing filler material.

As can be seen from the foregoing description, the foregoing embodiment in this application implements the following technical effect: The sealing effect is stable, and the structure is simple, to facilitate production and manufacturing.

Apparently, the foregoing described embodiments are only some embodiments rather than all the embodiments of this application. All other embodiments obtained by a person of ordinary skill in the art based on the embodiments of this application without creative efforts shall fall within the protection scope of this application.

It should be noted that terms used herein are only for describing specific implementations and are not intended to limit exemplary implementations according to this application. As used herein, the singular form is intended to include the plural form, unless the context clearly indicates otherwise. In addition, it should further be understood that terms "comprise" and/or "include" used in this specification indicate that there are features, steps, operations, devices, components, and/or combinations thereof.

It should be noted that in this specification, claims, and accompanying drawings of this application, the terms "first", "second", and so on are intended to distinguish similar objects but do not necessarily indicate a specific order or sequence. It is to be understood that such used data is interchangeable where appropriate so that the implementations of this application described here can be implemented in an order other than those illustrated or described here.

The above descriptions are merely preferred embodiments of this application and are not intended to limit this application. For a person skilled in the art, this application may have various modifications and changes. Any modification, equivalent replacement, or improvement made without departing from the spirit and principle of this application shall fall within the protection scope of this application.

## Claims

1. A waste battery thermal desorption treatment system, comprising:
a rotary kiln (10), provided with a feed port (11), a thermal desorption cavity, a heating cavity, a discharge port (12), and a first exhaust port (13), wherein the feed port (11) is in communication with the discharge port (12) through the thermal desorption cavity, the first exhaust port (13) is in communication with the thermal desorption cavity, and at least part of the thermal desorption cavity is located in the heating cavity and is rotatably provided relative to the heating cavity;
a dust removal apparatus (30), comprising a housing (31) and a dust removal structure (32) disposed in the housing (31), wherein the housing (31) is provided with a gas inlet port (33) and a second exhaust port (34) in communication with the first exhaust port (13), and the dust removal structure (32) is configured to collect impurities in a gas exhausted from the first exhaust port (13), to enable gaseous components separated from the impurities in the gas to enter the second exhaust port (34);
a condenser (40), wherein the condenser (40) is in communication with the second exhaust port (34), to condense an electrolyte constituent in the gaseous components and form an electrolyte; and
an adsorption column (50), wherein a defluorination agent is disposed in the adsorption column (50), to use the defluorination agent to perform dry defluorination on remaining constituents in the gaseous components.

2. The waste battery thermal desorption treatment system according to claim 1, wherein the rotary kiln (10) comprises:
a heating furnace (14), provided with the heating cavity;
a heating apparatus (15), disposed in the heating cavity;
a rotary cylinder (16), provided with the thermal desorption cavity, wherein at least part of the rotary cylinder (16) extends into the heating cavity and is rotatably connected to the heating furnace (14);
a kiln head cover (1701), disposed at one end of the rotary cylinder (16), wherein the feed port (11) is provided in the kiln head cover (1701); and
a kiln tail cover (1702), disposed at the other end of the rotary cylinder (16), wherein the discharge port (12) is provided in the kiln tail cover (1702),
wherein the first exhaust port (13) is provided in the kiln head cover (1701) or the kiln tail cover (1702).

3. The waste battery thermal desorption treatment system according to claim 1, wherein the waste battery thermal desorption treatment system further comprises:
a cooling apparatus (20), wherein the cooling apparatus (20) is in communication with the discharge port (12), to cool and reduce the temperature of a material after thermal desorption is completed;
a buffering apparatus (60), in communication with the condenser (40), wherein the buffering apparatus (60) is configured to collect the electrolyte formed after condensation; and
a first pump body structure (70), wherein the first pump body structure (70) is in communication with the buffering apparatus (60), to pump the electrolyte buffered in the buffering apparatus (60) outside the waste battery thermal desorption treatment system.

4. The waste battery thermal desorption treatment system according to claim 1, wherein the adsorption column (50) is provided with a third exhaust port (51), and the waste battery thermal desorption treatment system further comprises:
a waste gas treatment apparatus (80), wherein the waste gas treatment apparatus (80) is in communication with the third exhaust port (51), to recycle or burn a gas exhausted from the third exhaust port (51).

5. The waste battery thermal desorption treatment system according to claim 1, wherein the waste battery thermal desorption treatment system comprises at least two dust removal apparatuses (30), the waste battery thermal desorption treatment system further comprises a dust collection system, and the dust collection system comprises a cyclonic separation apparatus (1510), a transport pipe (1521), and a material recycling apparatus (1530); and
the at least two dust removal apparatuses (30) comprise a first dust removal apparatus (310) and a second dust removal apparatus (320), an outlet port of the first dust removal apparatus (310) is in communication with a first end of the transport pipe (1521), an outlet port of the second dust removal apparatus (320) is in communication with a second end of the transport pipe (1521), a third end of the transport pipe (1521) is in communication with a gas intake port of the cyclonic separation apparatus (1510), and an outlet port of the cyclonic separation apparatus (1510) is in communication with an entrance of the material recycling apparatus (1530).

6. The waste battery thermal desorption treatment system according to claim 5, wherein the dust collection system further comprises a sweeping apparatus, an outlet port of each dust removal apparatus (30) is in communication with the transport pipe (1521) through a dust exit pipe (1522), the transport pipe (1521) is provided with at least two material drop spaces (15211), the at least two material drop spaces (15211) are respectively opposite to the dust exit pipes (1522) in a one-to-one correspondence, the sweeping apparatus is provided with at least one blowing port, and the blowing port is opposite to the material drop spaces (15211).

7. The waste battery thermal desorption treatment system according to claim 1, wherein the waste battery thermal desorption treatment system further comprises a self-cleaning mechanism, the self-cleaning mechanism is used for the rotary kiln (10), the rotary kiln (10) comprises a rotary cylinder (16), the self-cleaning mechanism comprises a scraping member (1610) movably disposed in the rotary cylinder (16), the scraping member (1610) comprises a body (1611) and a plurality of scraping claws (1612), the body (1611) extends in an axial direction of the rotary cylinder (16), the plurality of scraping claws (1612) are disposed around a periphery of the body (1611), and the scraping claws (1612) are configured to scrape off a material deposit on an inner wall of the rotary cylinder (16).

8. The waste battery thermal desorption treatment system according to claim 7, wherein the plurality of scraping claws (1612) are spirally disposed around the body (1611), and the plurality of scraping claws (1612) are connected end to end to form a spring-shaped structure.

9. The waste battery thermal desorption treatment system according to claim 8, wherein a toggle plate (161) extending in a radial direction of the rotary cylinder (16) is disposed on the inner wall of the rotary cylinder (16), the scraping member (1610) further comprises a retaining plate (1613) disposed corresponding to the toggle plate (161), the retaining plate (1613) is connected to the body (1611), and the retaining plate (1613) and the scraping member (1610) are spaced apart.

10. The waste battery thermal desorption treatment system according to claim 7, wherein the rotary kiln (10) further comprises a kiln head cover (1701) disposed at a front end of the rotary cylinder (16) and a kiln tail cover (1702) disposed at a tail end of the rotary cylinder (16), the self-cleaning mechanism further comprises a first connecting base (1620) and a first connecting member (1630), the first connecting base (1620) is connected to an outer side of the kiln head cover (1701) or the kiln tail cover (1702), and the first connecting member (1630) is movably connected to the first connecting base (1620) and the scraping member (1610).

11. The waste battery thermal desorption treatment system according to claim 7, wherein the rotary kiln (10) further comprises a kiln head cover (1701) disposed at a front end of the rotary cylinder (16) and a kiln tail cover (1702) disposed at a tail end of the rotary cylinder (16), and the self-cleaning mechanism further comprises:
a first connecting base (1620), connected to an outer side of the kiln head cover (1701);
a second connecting base (1640), connected to an outer side of the kiln tail cover (1702);
a first connecting member (1630), movably connected to the first connecting base (1620) and one end of the scraping member (1610); and
a second connecting member (1650), movably connected to the second connecting base (1640) and the other end of the scraping member (1610).

12. The waste battery thermal desorption treatment system according to claim 1, wherein the waste battery thermal desorption treatment system further comprises a battery crushing apparatus, the battery crushing apparatus is configured to crush a battery, a crushed battery material generated by the battery crushing apparatus passes through the feed port (11) to enter the thermal desorption cavity, and the battery crushing apparatus comprises:
a supporting body (171), wherein the supporting body (171) is provided with a crushing cavity (172) and a feed channel (173) that are in communication with each other, and the feed channel (173) is located above the crushing cavity (172);
a first gas introduction portion (174), in communication with the crushing cavity (172), wherein a first inert gas is introduced into the crushing cavity (172) through the first gas introduction portion (174);
a feed assembly (175), disposed in the feed channel (173), wherein the feed assembly (175) comprises a first movement member (1751) and a second movement member (1752) that are spaced apart in an extension direction of the feed channel (173), a first partition cavity (1753) is provided between the first movement member (1751) and the second movement member (1752), the first movement member (1751) and the second movement member (1752) are separately movably disposed, and through movement of the first movement member (1751) and the second movement member (1752), a to-be-crushed material drops into the crushing cavity (172) or drops into the first partition cavity (1753); and
a second gas introduction portion (176), disposed between the first movement member (1751) and the second movement member (1752) and is in communication with the first partition cavity (1753), and a second inert gas is introduced into the first partition cavity (1753) through the second gas introduction portion (176).

13. The waste battery thermal desorption treatment system according to claim 12, wherein the supporting body (171) is provided with a first through opening (177), the first through opening (177) extends in a circumferential direction of the supporting body (171), and at least part of the first movement member (1751) is inserted into the feed channel (173) through the first through opening (177) and moves in a radial direction of the feed channel (173).

14. The waste battery thermal desorption treatment system according to claim 12, wherein the supporting body (171) is provided with a second through opening (178), the second through opening (178) extends in a circumferential direction of the supporting body (171), and at least part of the second movement member (1752) is inserted into the feed channel (173) through the second through opening (178) and moves in a radial direction of the feed channel (173).

15. The waste battery thermal desorption treatment system according to claim 1, wherein the rotary kiln (10) comprises:
a kiln head cover (1701), a kiln tail cover (1702), and a rotary cylinder (16), wherein a connecting end of the kiln head cover (1701) and a connecting end of the kiln tail cover (1702) are respectively sleeved over two ends of the rotary cylinder (16); and
a sealing structure (18), wherein a to-be-sealed gap exists between a radial direction of the kiln head cover (1701) and/or a radial direction of the kiln tail cover (1702) and a radial direction of the rotary cylinder (16), the rotary cylinder (16) is rotatably disposed relative to the kiln head cover (1701) and the kiln tail cover (1702), and the sealing structure (18) is configured to block and seal the to-be-sealed gap,
wherein the sealing structure (18) comprises:
a first sealing portion (181), wherein the first sealing portion (181) is a flexible structure, and the flexible structure is mounted in the to-be-sealed gap; and/or
a second sealing portion (182), connected to the connecting end of the kiln head cover (1701) or the connecting end of the kiln tail cover (1702), wherein the second sealing portion (182) is configured to defining a sealing cavity with the rotary cylinder (16), and a protection gas is filled in the sealing cavity; and/or
a third sealing portion (183), mounted at the connecting end of the kiln head cover (1701) or the connecting end of the kiln tail cover (1702), wherein the third sealing portion (183) comprises a first connecting portion (1831), a second connecting portion (1832), and a sealing member (1833), the first connecting portion (1831) is fixedly connected to the kiln head cover (1701) or the kiln tail cover (1702), a sealing end of the first connecting portion (1831) and a sealing end of the second connecting portion (1832) are arranged in an axial direction of the kiln head cover (1701) or the kiln tail cover (1702), and the sealing member (1833) is configured to seal a gap between the sealing end of the first connecting portion (1831) and the sealing end of the second connecting portion (1832).

16. The waste battery thermal desorption treatment system according to claim 15, wherein
the first sealing portion (181) is an annular structure, an outer ring of the first sealing portion (181) is fixedly connected to the kiln head cover (1701) or the kiln tail cover (1702), and an inner ring of the first sealing portion (181) is j oined to an outer wall of the rotary cylinder (16); and/or
the sealing cavity is an annular cavity body, and the annular cavity body is disposed surrounding the outer wall of the rotary cylinder (16).

17. The waste battery thermal desorption treatment system according to claim 15, wherein the sealing structure (18) comprises the first sealing portion (181), the second sealing portion (182), and the third sealing portion (183), and the second sealing portion (182) is disposed between the first sealing portion (181) and the third sealing portion (183); and the sealing structure (18) further comprises:
a flexible connecting member (184), disposed between the first sealing portion (181) and the second sealing portion (182), wherein the flexible connecting member (184) is an annular housing structure, and at least part of the flexible connecting member (184) is retractably disposed in an axial direction of the rotary cylinder (16).

18. The waste battery thermal desorption treatment system according to claim 1, wherein the rotary kiln (10) comprises:
a rotary cylinder (16) and an end portion supporting structure (192), wherein the rotary cylinder (16) is rotatably disposed, the end portion supporting structure (192) is disposed at an end portion of the rotary cylinder (16), and the end portion supporting structure (192) is fixedly disposed;
a rotary bearing structure (193), wherein one of an inner ring of the rotary bearing structure (193) and an outer ring of the rotary bearing structure (193) is connected to the rotary cylinder (16), and the other one of the inner ring of the rotary bearing structure (193) and the outer ring of the rotary bearing structure (193) is connected to the end portion supporting structure (192); and
a sealing assembly (194), mounted on the end portion supporting structure (192), wherein the sealing assembly (194) comprises a sealing part (1941) and an abutting part (1942), the sealing part (1941) is disposed on the rotary bearing structure (193), and the abutting part (1942) abuts against one end of the sealing part (1941), to make the other end of the sealing part (1941) joined to at least part of the rotary bearing structure (193) under an abutting action of the abutting part (1942).

19. The waste battery thermal desorption treatment system according to claim 18, wherein the abutting part (1942) comprises:
an abutting rod (19421), wherein an end portion of the abutting rod (19421) abuts against an end of the sealing part (1941), and a limiting step (194211) is disposed on the abutting rod (19421);
an elastic member (19422), sleeved over the abutting rod (19421), wherein one end of the elastic member (19422) abuts against the limiting step (194211); and
an abutting sleeve (19423), sleeved over an end of the abutting rod (19421) away from the sealing part (1941), wherein the abutting sleeve (19423) is disposed protruding from a sidewall of the abutting rod (19421), and the other end of the elastic member (19422) abuts against the abutting sleeve (19423).

20. The waste battery thermal desorption treatment system according to claim 18, wherein the rotary bearing structure (193) comprises a first rotary bearing (1931), the end portion supporting structure (192) comprises a kiln head supporting structure (1921), and the kiln head supporting structure (1921) comprises:
a first supporting foundation (19211) and a first supporting board group (19212), wherein the first supporting board group (19212) is disposed on the first supporting foundation (19211), the first supporting board group (19212) is connected to an outer ring of the first rotary bearing (1931), and the rotary cylinder (16) is connected to an inner ring of the first rotary bearing (1931).
